# EUROPEAN PATENT APPLICATION

(11) **EP 4 814 712 A1**
(43) Date of publication of application: **30.09.2026**
(21) Application number: 24915412.1
(22) Date of filing: 23.12.2024
(51) Int. Cl.: G06F 9/451, G06F 40/186, G06F 40/174, G06F 16/3329, G06F 3/04895, G06N 3/04, G06N 3/08

(54) **METHOD AND ELECTRONIC DEVICE FOR GENERATING PROMPT TO BE INPUTTED INTO AI MODEL, AND RECORDING MEDIUM**

(30) Priority: 02.01.2024 KR 20240000402; 16.01.2024 KR 20240007009
(71) Applicant: Samsung Electronics Co., Ltd., Suwon-si, Gyeonggi-do 16677 (KR)
(72) Inventor: RYU, Jaemin, Suwon-si, Gyeonggi-do 16677 (KR); PARK, Soonsang, Suwon-si, Gyeonggi-do 16677 (KR); SONG, Gajin, Suwon-si, Gyeonggi-do 16677 (KR); SONG, Taieui, Suwon-si, Gyeonggi-do 16677 (KR); LEE, Heejae, Suwon-si, Gyeonggi-do 16677 (KR); HWANG, Dongchoon, Suwon-si, Gyeonggi-do 16677 (KR)
(74) Representative: Gulde & Partner
(86) International application number: PCT/KR2024/020941
(87) International publication number: WO 2025/147000

(57) **Abstract**

An electronic device, according to various embodiments of the present document, may comprise: a memory; and a processor operatively connected to the memory. The memory may store: user data related to a user of the electronic device; and a plurality of prompt templates. The memory may store instructions which are executed by the processor and, when executed, instruct the electronic device to: receive a user input including a query for an artificial intelligence (AI) model; and select at least one of the plurality of prompt templates stored in the memory, on the basis of the user input. The memory may store instructions which instruct the electronic device to: check, among input fields included in the selected prompt template, at least one input field which may be filled in using the information included in the received user input, and at least one input field which may not be filled in using the information included in the user input; for the selected prompt template, on the basis of the content of the user input, fill in the at least one input field which may be filled in using the information included in the user input, and on the basis of the user data stored in the memory, fill in the at least one input field which may not be filled in using the information included in the user input, and thus generate a prompt corresponding to the user input; and input the generated prompt into the AI model.

## Description

### [Technical Field]

The disclosure relates to an electronic device and, for example, to a method for generating a prompt to be input to an AI model from a user input and a recording medium.

### [Background Art]

A generative artificial intelligence (AI) model refers to an artificial intelligence model that learns from various data and generates new information and sentences. Such a generative AI model (hereinafter, an AI model) is utilized for natural language processing, and may understand a context from given information and perform various language tasks.

A prompt may refer to an instruction for generating an image or text result in an AI model. For example, a prompt may serve to induce an AI model to perform a task desired by a user. In order to obtain a higher-quality response through an AI model, it is important for a user to write a prompt that is well understood by the AI model and may operate well through the AI model, and, for example, when a response type, a tone, a reader level, and a response length are clearly configured, the quality of a response of the AI model may be improved. That is, a response of the AI model may vary depending on how a user inputs a prompt.

The above information may be provided as related art for the purpose of facilitating an understanding of the disclosure. No assertion or determination is made as to whether any of the foregoing may be considered prior art with respect to the present disclosure.

### [Disclosure of Invention]

### [Technical Problem]

Since an AI model may be used by various users, there may be a variation in prompt writing ability and/or level among individuals for the AI model, and accordingly, the user may have difficulty in writing an optimal prompt for the AI model to be used. For example, a general user who is not a prompt engineer may have difficulty using parameter adjustment for various types of AI models (or a large language model (LLM)) and prompt engineering techniques such as chain of thought (COT) and Few-shot.

### [Solution to Problem]

An electronic device according to the disclosure (or specification or invention) may include a memory, and a processor operatively connected to the memory.

According to an embodiment, the memory may be configured to store user data related to a user of the electronic device, and multiple prompt templates.

According to an embodiment, the memory may be configured to store instructions that are executed by the processor, wherein the instructions, when executed, cause the electronic device to receive a user input including a query to an artificial intelligence (AI) model, and select at least one of the multiple prompt templates stored in the memory, based on the user input.

According to an embodiment, the memory may be configured to store instructions causing the electronic device to identify, among input fields included in the selected prompt template, at least one input field that is fillable using information included in the received user input and at least one input field that is not fillable using the information included in the user input, generate a prompt corresponding to the user input by filling, for the selected prompt template, the at least one input field that is fillable using the information included in the user input, based on content of the user input, and filling the at least one input field that is not fillable using the information included in the user input, based on the user data stored in the memory, and input the generated prompt to the AI model.

A method performed by an electronic device according to various embodiments of the disclosure may include receiving a user input including a query to an artificial intelligence (AI) model, selecting at least one of multiple prompt templates, based on the user input, identifying, among input fields included in the selected prompt template, at least one input field that is fillable using information included in the received user input and at least one input field that is not fillable using the information included in the user input, generating a prompt corresponding to the user input by filling, for the selected prompt template, the at least one input field that is fillable using the information included in the user input, based on content of the user input, and filling the at least one input field that is not fillable using the information included in the user input, based on user data stored in a memory, and inputting the generated prompt to the AI model.

A non-transitory computer-readable recording medium according to various embodiments of the disclosure may store instructions that, when executed by an electronic device, cause the electronic device to perform operations of receiving a user input including a query to an artificial intelligence (AI) model, selecting at least one of multiple prompt templates, based on the user input, identifying, among input fields included in the selected prompt template, at least one input field that is fillable using information included in the received user input and at least one input field that is not fillable using the information included in the user input, generating a prompt corresponding to the user input by filling, for the selected prompt template, the at least one input field that is fillable using the information included in the user input, based on content of the user input, and filling the at least one input field that is not fillable using the information included in the user input, based on user data stored in a memory, and inputting the generated prompt to the AI model.

### [Advantageous Effects of Invention]

Various embodiments of the disclosure may provide an electronic device and a method for generating a prompt to be input to an AI model, by which, when a user inputs a query to an AI model through an electronic device, even if a simple question is input, a prompt corresponding to the query of the user may be generated based on a stored prompt template.

### [Brief Description of Drawings]

With regard to the description of the drawings, the same or like reference signa may be used to designate the same or like elements.
FIG. 1 is a block diagram of an electronic device in a network environment according to various embodiments.
FIG. 2 is a block diagram illustrating an integrated intelligence system according to an embodiment.
FIG. 3 is a diagram illustrating a form in which relationship information between a concept and an action is stored in a database, according to an embodiment.
FIG. 4A is a block diagram of a generative artificial intelligence system according to an embodiment.
FIG. 4B illustrates a prompt to be input to an AI model according to an embodiment.
FIG. 5 is a block diagram of a prompt generation system according to an embodiment.
FIG. 6 is a block diagram of an electronic device according to an embodiment.
FIG. 7 is a block diagram of a prompt generation system according to an embodiment.
FIG. 8 illustrates an example of generating a prompt from a user input according to an embodiment.
FIG. 9 is a sequence diagram of a prompt generation method according to an embodiment.
FIG. 10 illustrates a user interface for configuring a detail level of a response of an AI model according to an embodiment.
FIG. 11 illustrates a user interface displaying a sample prompt according to an embodiment.
FIG. 12 illustrates a user interface for configuring a prompt-related parameter according to an embodiment.
FIG. 13 illustrates an example of generating a prompt from a user input according to an embodiment.
FIG. 14 shows a table illustrating an example of a prompt level configured by a user and a prompt template according to an embodiment.
FIG. 15 illustrates an example of generating a prompt from a user input according to an embodiment.
FIG. 16 illustrates an example of generating a prompt from a user input according to an embodiment.

### [Mode for the Invention]

Hereinafter, embodiments of the disclosure will be described in detail with reference to the drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

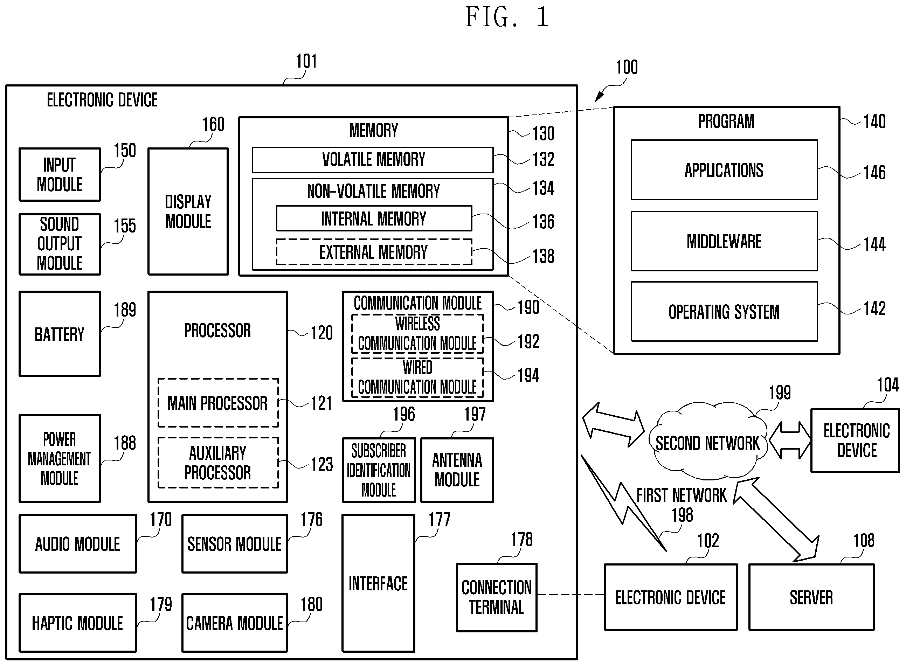

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

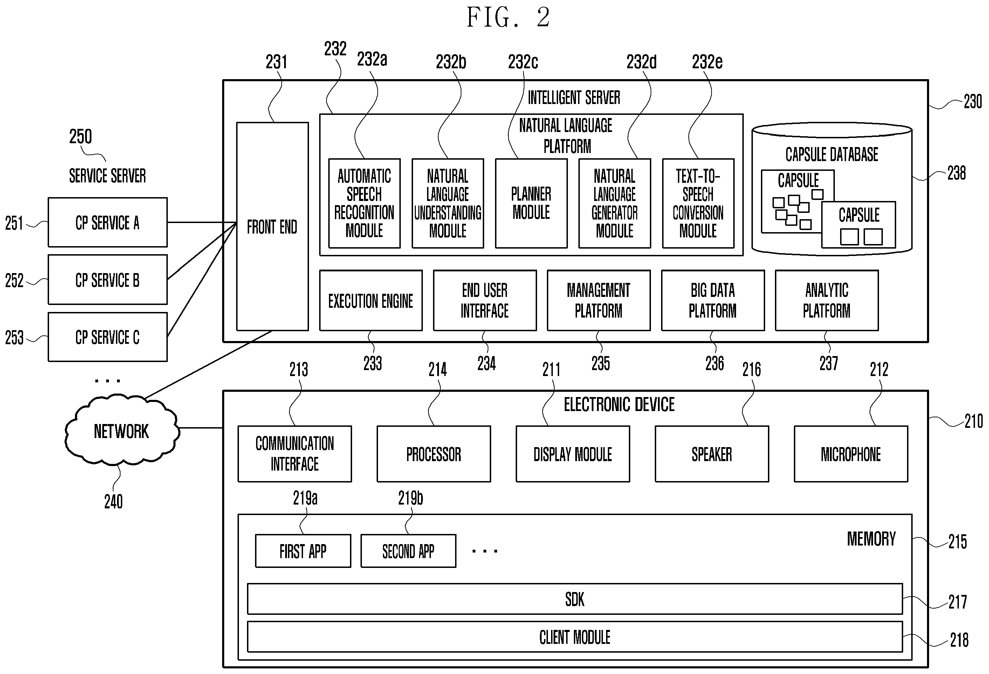

FIG. 2 is a block diagram illustrating an integrated intelligence system according to various embodiments.

Referring to FIG. 2, according to an embodiment, an integrated intelligence system may include an electronic device 210 (e.g., the electronic device 101 of FIG. 1), an intelligent server 230 (e.g., the server 108 of FIG. 1), and a service server 250 (e.g., the server 108 of FIG. 1).

According to an embodiment, the electronic device 210 may be a terminal device (or an electronic device) connectable to the Internet, and may be, for example, a mobile phone, a smartphone, a personal digital assistant (PDA), a laptop computer, a TV, a home appliance, a wearable device, an HMD, or a smart speaker.

According to the illustrated embodiment, the electronic device 210 may include a communication interface 213 (e.g., the interface 177 of FIG. 1), a microphone 212 (e.g., the input module 150 of FIG. 1), a speaker 216 (e.g., the audio output module 155 of FIG. 1), a display module 211 (e.g., the display module 160 of FIG. 1), a memory 215 (e.g., the memory 130 of FIG. 1), or a processor 214 (e.g., the processor 120 of FIG. 1). The components listed above may be operatively or electrically connected to each other. The electronic device 210 may include at least some of components and/or functions of the electronic device 101 of FIG. 1.

According to an embodiment, the communication interface 213 may be configured to be connected to an external device and transmit and receive data. According to an embodiment, the microphone 212 may receive a sound (e.g., a user utterance) and convert the sound into an electrical signal. According to an embodiment, the speaker 216 may output an electrical signal as a sound (e.g., voice).

According to an embodiment, the display module 211 may be configured to display an image or a video. According to an embodiment, the display module 211 may also display a graphic user interface (GUI) of an app (or an application program) being executed. The display module 211 according to an embodiment may receive a touch input through a touch sensor. For example, the display module 211 may receive a text input through a touch sensor of an on-screen keyboard area displayed in the display module 211.

According to an embodiment, the memory 215 may store a client module 218, a software development kit (SDK) 217, and multiple apps 219a and 219b. The client module 218 and the SDK 217 may configure a framework (or a solution program) for performing a general-purpose function. In addition, the client module 218 or the SDK 217 may configure a framework for processing a user input (e.g., a voice input, a text input, or a touch input).

According to an embodiment, the multiple apps 219a and 219b stored in the memory 215 may be programs for performing a designated function. According to an embodiment, the multiple apps may include the first app 219a and the second app 219b. According to an embodiment, each of the multiple apps 219a and 219b may include multiple actions for performing a designated function. For example, the apps 219a and 219b may include an alarm app, a message app, and/or a scheduling app. According to an embodiment, the multiple apps 219a and 219b may be executed by the processor 214 to sequentially execute at least some of the multiple actions.

According to an embodiment, the processor 214 may control an overall operation of the electronic device 210. For example, the processor 214 may be electrically connected to the communication interface 213, the microphone 212, the speaker 216, and the display module 211 to perform a designated operation.

According to an embodiment, the processor 214 may also execute a program stored in the memory 215 to perform a designated function. For example, the processor 214 may execute at least one of the client module 218 or the SDK 217 to perform the following operations for processing a user input. The processor 214 may, for example, control operations of the multiple apps 219a and 219b through the SDK 217. The following operations described as operations of the client module 218 or the SDK 217 may be operations performed by execution of the processor 214.

According to an embodiment, the client module 218 may receive a user input. For example, the client module 218 may receive a voice signal corresponding to a user utterance detected through the microphone 212. Alternatively, the client module 218 may receive a touch input detected through the display module 211. Alternatively, the client module 218 may receive a text input detected through a keyboard or an on-screen keyboard. In addition, the client module may receive various types of user inputs detected through an input module included in the electronic device 210 or an input module connected to the electronic device 210. The client module 218 may transmit the received user input to the intelligent server 230. The client module 218 may transmit, together with the received user input, state information of the electronic device 210 to the intelligent server 230. The state information may be, for example, execution state information of an app.

According to an embodiment, the client module 218 may receive a result corresponding to a received user input. For example, when the intelligent server 230 is capable of deriving a result corresponding to the received user input, the client module 218 may receive the result corresponding to the received user input. The client module 218 may display the received result on the display module 211. In addition, the client module 218 may output the received result as audio through the speaker 216.

According to an embodiment, the client module 218 may receive a plan corresponding to a received user input. The client module 218 may display, on the display module 211, a result of executing multiple actions of an app according to the plan. The client module 218 may, for example, sequentially display results of executing the multiple actions on the display module 211 and output audio through the speaker 216. As another example, the electronic device 210 may display only a part (e.g., a result of a last action) of results of executing the multiple actions on the display module 211 and output the result as audio through the speaker 216.

According to an embodiment, the client module 218 may receive, from the intelligent server 230, a request for acquiring information required to derive a result corresponding to a voice input. According to an embodiment, the client module 218 may transmit the required information to the intelligent server 230 in response to the request.

According to an embodiment, the client module 218 may transmit result information on execution of multiple actions according to a plan to the intelligent server 230. The intelligent server 230 may identify that a received user input has been correctly processed, by using the result information.

According to an embodiment, the client module 218 may include a speech recognition module. According to an embodiment, the client module 218 may recognize a voice input for performing a limited function through the speech recognition module. For example, the client module 218 may execute an intelligent app for processing a voice input for performing a coordinated operation through a designated input (e.g., wake up!).

According to an embodiment, the intelligent server 230 may receive information related to a user voice input from the electronic device 210 through a communication network. According to an embodiment, the intelligent server 230 may change data related to a received voice input into text data. According to an embodiment, the intelligent server 230 may generate a plan for performing a task corresponding to the user voice input, based on the text data.

According to an embodiment, the plan may be generated by an artificial intelligence (AI) system. The artificial intelligence system may be a rule-based system or a neural network-based system (e.g., a feedforward neural network (FNN) or a recurrent neural network (RNN)). Alternatively, the artificial intelligence system may be a combination of the above or another artificial intelligence system. According to an embodiment, the plan may be selected from a predefined set of plans or may be generated in real time in response to a user request. For example, the artificial intelligence system may select at least one plan from among a plurality of predefined plans.

According to an embodiment, the intelligent server 230 may transmit a result according to a generated plan to the electronic device 210, or may transmit the generated plan to the electronic device 210. According to an embodiment, the electronic device 210 may display the result according to the plan on the display module 211. According to an embodiment, the electronic device 210 may display a result of executing an action according to the plan on the display module 211.

According to an embodiment, the intelligent server 230 may include a front end 231, a natural language platform 232, a capsule database (DB) 238, an execution engine 233, an end user interface 234, a management platform 235, a big data platform 236, or an analytic platform 237.

According to an embodiment, the front end 231 may receive a user input received from the electronic device 210. The front end 231 may transmit a response corresponding to the user input.

According to an embodiment, the natural language platform 232 may include an automatic speech recognition module (ASR module) 232a, a natural language understanding module (NLU module) 232b, a planner module 232c, a natural language generator module (NLG module) 232d, or a text-to-speech conversion module (text-to-speech module, TTS module) 232e.

According to an embodiment, the automatic speech recognition module 232a may convert a voice input received from the electronic device 210 into text data. According to an embodiment, the natural language understanding module 232b may identify an intent of a user by using the text data of the voice input. For example, the natural language understanding module 232b may identify an intent of a user by performing syntactic analysis or semantic analysis on a user input in a form of text data. According to an embodiment, the natural language understanding module 232b may identify a meaning of a word extracted from a voice input by using a linguistic feature (e.g., a grammatical element) of a morpheme or a phrase, and may determine an intent of a user by matching the identified meaning of the word with the intent. The natural language understanding module 223b may obtain intent information corresponding to a user utterance. The intent information may be information indicating an intent of a user determined by interpreting text data. The intent information may include information indicating an action or a function that the user is to execute by using a device.

According to an embodiment, the planner module 232c may generate a plan by using a parameter and an intent determined by the natural language understanding module 232b. According to an embodiment, the planner module 232c may determine multiple domains required for performing a task, based on the determined intent. The planner module 232c may determine multiple actions included in each of the multiple domains determined based on the intent. According to an embodiment, the planner module 232c may determine a parameter required for executing the determined multiple actions or a result value output by execution of the multiple actions. The parameter and the result value may be defined as a concept of a designated format (or a class). Accordingly, the plan may include multiple actions determined by the intent of the user and multiple concepts. The planner module 232c may determine a relationship between the multiple actions and the multiple concepts in a stepwise (or hierarchical) manner. For example, the planner module 232c may determine an execution order of the multiple actions determined based on the intent of the user, based on the multiple concepts. In other words, the planner module 232c may determine the execution order of the multiple actions based on a parameter required for execution of the multiple actions and a result output by execution of the multiple actions. Accordingly, the planner module 232c may generate a plan including association information (e.g., ontology) between the multiple actions and the multiple concepts. The planner module 232c may generate the plan by using information stored in the capsule database in which a set of relationships between concepts and actions is stored.

According to an embodiment, the natural language generator module 232d may change designated information into a form of text. The information changed into the form of the text may be in a form of a natural language utterance. According to an embodiment, the text-to-speech conversion module 232e may change information in a form of text into information in a form of speech.

According to an embodiment, a part or all of functions of the natural language platform 232 may be implemented in the electronic device 210.

The capsule database may store information on a relationship between multiple concepts and actions corresponding to multiple domains. A capsule according to an embodiment may include multiple action objects (or action information) and concept objects (or concept information) included in a plan. According to an embodiment, the capsule database may store multiple capsules in a form of a concept action network (CAN). According to an embodiment, the multiple capsules may be stored in a function registry included in the capsule database.

The capsule database may include a strategy registry in which strategy information required for determining a plan corresponding to a user input is stored. The strategy information may include criterion information for determining one plan when there are multiple plans corresponding to the user input. According to an embodiment, the capsule database may include a follow-up action registry (follow-up registry) in which information of a follow-up action for suggesting the follow-up action to a user in a designated situation is stored. The follow-up action may include, for example, a follow-up utterance. According to an embodiment, the capsule database may include a layout registry for storing layout information of information output through the electronic device 210. According to an embodiment, the capsule database may include a vocabulary registry in which vocabulary information included in capsule information is stored. According to an embodiment, the capsule database may include a dialog registry in which information on a dialog (or interaction) with a user is stored. The capsule database may update a stored object through a developer tool. The developer tool may include, for example, a function editor for updating an action object or a concept object. The developer tool may include a vocabulary editor for updating vocabulary. The developer tool may include a strategy editor for generating and registering a strategy for determining a plan. The developer tool may include a dialog editor for generating a dialog with a user. The developer tool may include a follow-up action editor (follow-up editor) capable of activating a follow-up goal and editing a follow-up utterance for providing a hint. The follow-up goal may be determined based on a currently configured goal, a preference of a user, or an environmental condition. In an embodiment, the capsule database may also be implemented in the electronic device 210.

According to an embodiment, the execution engine 233 may derive a result by using the generated plan. The end user interface 234 may transmit the derived result to the electronic device 210. Accordingly, the electronic device 210 may receive the result and provide the received result to the user. According to an embodiment, the management platform 235 may manage information used in the intelligent server 230. According to an embodiment, the big data platform 236 may collect data of a user. According to an embodiment, the analytic platform 237 may manage a quality of service (QoS) of the intelligent server 230. For example, the analytic platform 237 may manage a component and a processing speed (or an efficiency) of the intelligent server 230.

According to an embodiment, the service server 250 may provide a designated service (e.g., food ordering or hotel reservation) to the electronic device 210. According to an embodiment, the service server 250 may be a server operated by a third party. According to an embodiment, the service server 250 may provide information for generating a plan corresponding to a received voice input to the intelligent server 230. The provided information may be stored in the capsule database. In addition, the service server 250 may provide result information according to the plan to the intelligent server 230. The service server 250 may include multiple service providers (e.g., CP service A 251, CP service B 252, and CP service C 253), and each of the service providers 251, 252, and 253 may provide a function for a domain related to each capsule stored in the capsule database 238 of the intelligent server 230.

In the integrated intelligence system described above, the electronic device 210 may provide various intelligent services to a user in response to a user input. The user input may include, for example, an input through a physical button, a touch input, or a voice input.

According to an embodiment, the electronic device 210 may provide a speech recognition service through an intelligent app (or a speech recognition app) stored therein. In this case, for example, the electronic device 210 may recognize a user utterance or a voice input received through the microphone 212 and provide a service corresponding to the recognized voice input to the user.

According to an embodiment, the electronic device 210 may perform a designated operation, based on a received voice input, alone or together with the intelligent server 230 and/or the service server 250. For example, the electronic device 210 may execute an app corresponding to the received voice input and perform the designated operation through the executed app.

According to an embodiment, when the electronic device 210 provides a service together with the intelligent server 230 and/or the service server 250, the electronic device 210 may detect a user utterance by using the microphone 212 and generate a signal (or voice data) corresponding to the detected user utterance. The electronic device 210 may transmit the voice data to the intelligent server 230 through a network 240 by using the communication interface 213.

The intelligent server 230 according to an embodiment may generate, as a response to a voice input received from the electronic device 210, a plan for performing a task corresponding to the voice input or a result of performing an action according to the plan. The plan may include, for example, multiple actions for performing a task corresponding to the voice input of the user and multiple concepts related to the multiple actions. The concept may define a parameter input for execution of the multiple actions or a result value output by execution of the multiple actions. The plan may include association information between the multiple actions and the multiple concepts.

According to an embodiment, the electronic device 210 may receive the response by using the communication interface 213. The electronic device 210 may output a voice signal generated in the electronic device 210 to the outside by using the speaker 216, or output an image generated in the electronic device 210 to the outside by using the display module 211.

In FIG. 2, an example in which an operation of speech recognition of a user input received in the electronic device 210, natural language understanding and generation, and result derivation using a plan is performed on the intelligent server 230 has been described, but various embodiments of the disclosure are not limited thereto. For example, at least some (e.g., the natural language platform 232, the execution engine 233, and the capsule database 238) of components of the intelligent server 230 may be embedded in the electronic device 210 (or the electronic device 101 of FIG. 1), and an operation thereof may be performed by the electronic device 210.

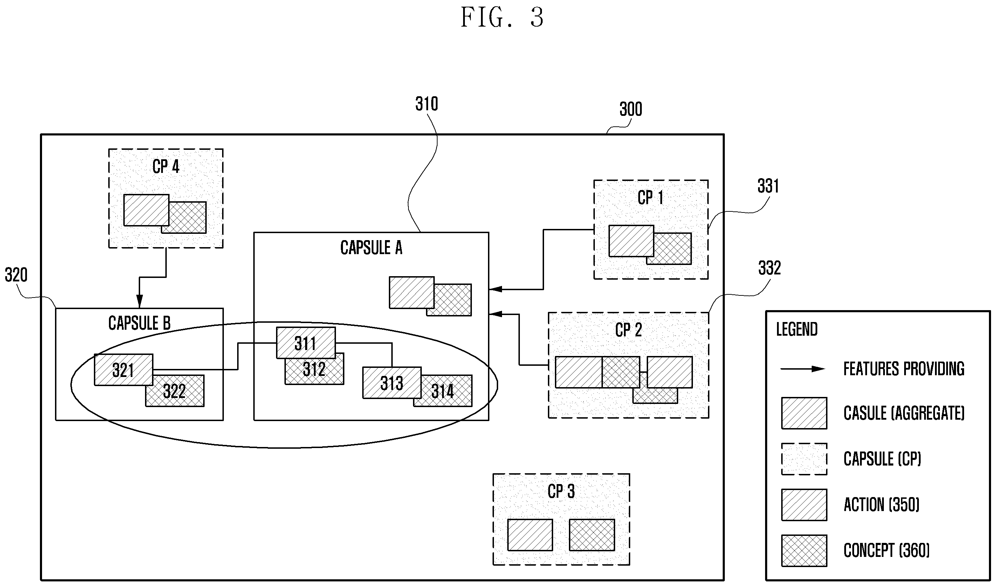

FIG. 3 is a diagram illustrating a form in which relationship information between a concept and an action is stored in a database, according to various embodiments.

According to an embodiment, a capsule database (e.g., the capsule database 238 of FIG. 2) of an intelligent server (e.g., the intelligent server 230 of FIG. 2) may store a capsule in a form of a concept action network (CAN) 300. The capsule database may store an action for processing a task corresponding to a voice input of a user and a parameter required for the action in a form of the concept action network (CAN).

According to an embodiment, the capsule database may store multiple capsules (capsule A 310 and capsule B 320) corresponding to multiple domains (e.g., applications), respectively. According to an embodiment, one capsule (e.g., capsule A 310) may correspond to one domain (e.g., location (geo) or application). In addition, one capsule may correspond to at least one service provider (e.g., CP 1 331 or CP 2 332) for performing a function for a domain related to the capsule. According to an embodiment, one capsule may include at least one action 350 and at least one concept 360 for performing a designated function.

According to an embodiment, a natural language platform (e.g., the natural language platform 232 of FIG. 2) may generate a plan for performing a task corresponding to a received voice input by using a capsule stored in the capsule database. For example, a planner module (e.g., the planner module 232c of FIG. 2) of the natural language platform may generate a plan by using a capsule stored in the capsule database. For example, a plan may be generated by using actions 311 and 313 and concepts 312 and 314 of capsule A 310 and an action 321 and a concept 322 of capsule B 320.

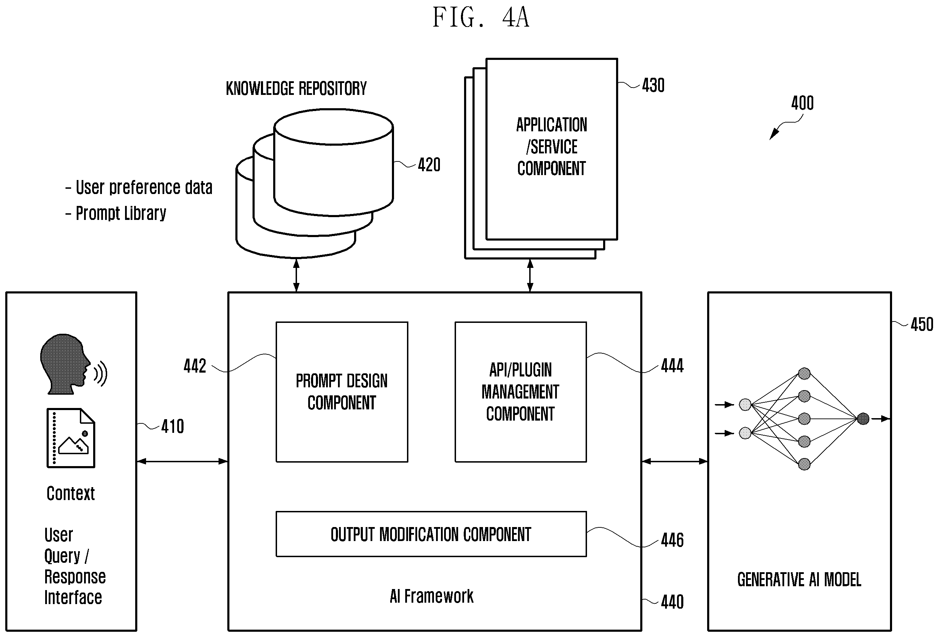

FIG. 4A is a block diagram of a generative artificial intelligence system according to an embodiment.

Referring to FIG. 4A, a generative artificial intelligence system 400 may include a generative AI model 450, an AI framework 440, a user query/response interface 410, an application/service component 430, and a knowledge repository 420. The AI framework 440 may include a prompt design component 442, an API/plugin management component 444, and an output modification component 446.

According to an embodiment, the user query/response interface 410 may receive an input of a user. The input of the user may be in a form of natural language, an image, and/or a video. In addition, when the input of the user is transmitted, context information may also be transmitted together. The context information may include various additional pieces of information at a time of the user input. For example, the context information may include information related to the user or an electronic device, such as information on an application currently used by the user or location information of the user. In addition, the user input may be in a form in which the natural language, the image, sound, and the context information described above are combined. In addition, the user input may be in a non-natural language form such as selecting a menu.

According to an embodiment, the user query/response interface 410 may output a result of the generative artificial intelligence system 400 to a user. The output may be in a natural language form or a specific content form, and may also be provided in a form such as an action requested by the user.

According to an embodiment, the AI framework 440 may receive an input of a user and may orchestrate and control respective components required for performing an intent of the user, based on a query of the user.

According to an embodiment, a user input received by the user query/response interface 410 may be transmitted to the prompt design component 442. The prompt design component 442 may use the user input to generate a prompt suitable for input to a large language model (LLM) or a large multimodal model (LMM). The prompt design component 442 may be an AI component using a machine learning algorithm or a neural network to develop a better prompt over time. The prompt design component 442 may access the knowledge repository 420 including user preference data, a prompt library, and a prompt example, based on the user input to obtain and generate a prompt, and may transmit the generated prompt to the LLM or the LMM.

According to an embodiment, the API/plug-in management component 444 may perform a role of communicating with external information if there is a request for additional information when a user input is transferred as an input of a generative model. The API/plug-in management component 444 may establish a channel enabling communication with the outside of an AI interface through an API and may enable access to various data sources through the established channel. In addition, when an action for finally performing the user input is required to be performed in an application or a service rather than an intermediate result, the API/plug-in management component 444 may request the action through the API. Information obtained from the outside may be used to generate a prompt in the prompt design component 442 together with the user input or may be transferred as an input of the generative model.

According to an embodiment, the output modification component 446 (or a refiner component) may fine-tune a result output from the generative model. For example, the output modification component 446 may validate whether content generated through the LLM and/or LMM is irrelevant, includes biased content, or includes harmful content. In addition, the output modification component 446 may determine a degree to which the result matches a result desired by a user, and may perform an additional process if the process is required. The output modification component 446 may additionally configure a hint for avoiding an undesired output and provide the hint to a user.

According to an embodiment, the generative AI model 450 may generally refer to an artificial intelligence neural network that generates new types of data, based on user input information. The generative AI model 450 may include a model generating an image and/or a model generating a language. Representative examples of the model generating an image include a generative adversarial network (GAN) model and a variational autoencoder (VAE) model, and as an example, a diffusion-based generative model using a VAE and a transformer structure may be taken. The model generating a language is a model trained to output a statistically most appropriate output value, based on an input value, and a model such as ChatGPT 3 or ChatGPT 4 may be taken as a representative example. In addition, there is a large multimodal model (LMM) capable of recognizing various types of data inputs, such as text, image, and speech, and generating new data corresponding thereto.

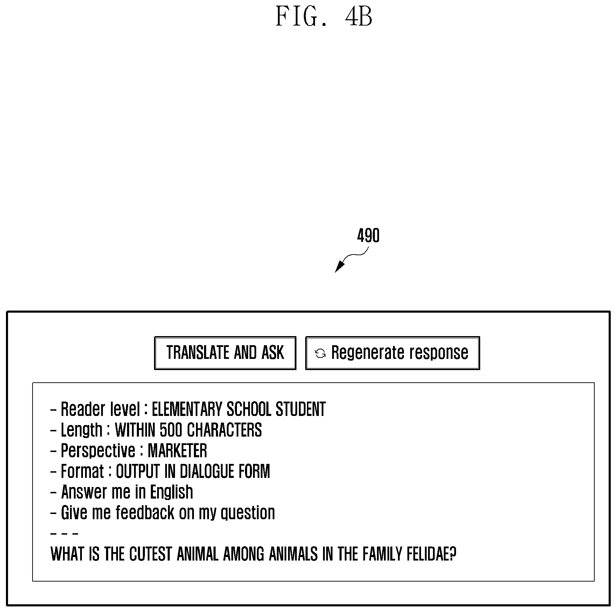

FIG. 4B illustrates a prompt to be input to an AI model according to an embodiment.

A generative artificial intelligence (AI) model (e.g., the generative AI model 450 of FIG. 4A) may be an artificial intelligence model that learns from various data and generates new information and sentences. In the disclosure, the generative AI model may also be referred to as an AI model or a large language model (LLM).

According to an embodiment, a user may input a user input including a query in order to obtain desired information through the AI model. For example, the user may input the query through a text input using a keypad or a keyboard, or through a voice input via a microphone. The user input to the AI model may be input to the AI model as a prompt. The prompt is an instruction for generating a response in the AI model and may induce the AI model to perform a task desired by the user.

According to an embodiment, in order to obtain a desired response through the AI model, the user may need to write a prompt that is well understood by the AI model and may operate well through the AI model. For example, parameters required for a response of the AI model include information such as a reader level, a response length, a responder perspective, an output format, and an output language, and when these parameters are input in a prompt through a user input, the AI model may clearly understand a query of the user and provide a desired response.

Referring to FIG. 4B, a prompt 490 generated according to a user input may include information related to "What is the cutest animal among animals in the family Felidae?" which is query content, and "reader level, length, perspective, format, answer me in English" defining parameters. When the prompt 490 in which various parameters are input described above is input to an AI model (or LLM), the AI model may output a response in English, in a dialog form, from a perspective of a marketer, within 500 characters, at an elementary school student level, as defined in the prompt.

Since the AI model may be used by various users, there may be a variation in prompt writing ability/level among individuals for the AI model, and accordingly, the user may have difficulty in writing an optimal prompt for the AI model to be used.

Hereinafter, various embodiments for generating a prompt to be input to an AI model from a user input, based on a pre-stored prompt template and user data, even when a user inputs only brief information, will be described.

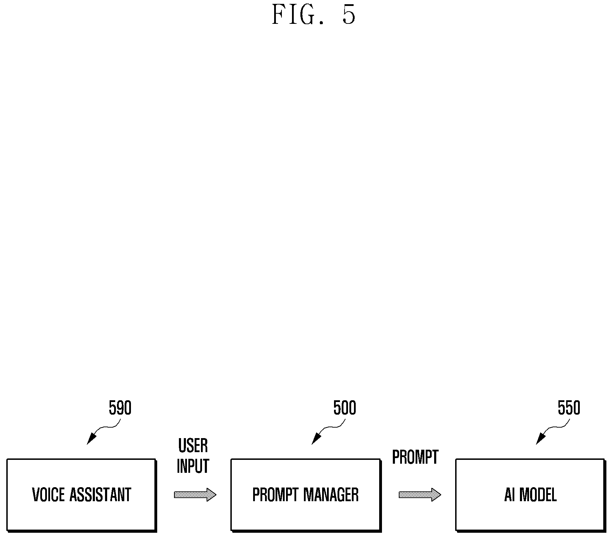

FIG. 5 is a block diagram of a prompt generation system according to an embodiment.

According to an embodiment, a prompt generation system may include a voice assistant 590, a prompt manager 500, and an AI model 550.

According to an embodiment, the voice assistant 590 may include a hardware and/or software module based on artificial intelligence (AI) that understands content of speech input by the user and processes an operation according to a request of the user. For example, the voice assistant 590 may analyze a voice signal by using a speech recognition technology (automatic speech recognition (ASR)) to convert the voice signal into text, interpret content of the converted text, and process various operations, such as execution and control of an application requested by the user, device configuration control, and retrieval and provision of information, based on the interpretation of the text.

According to an embodiment, a user input to the voice assistant 590 may include a query for requesting the AI model 550 to execute a task and provide a response, and the voice assistant 590 may transfer the user input including the query to the AI model 550, obtain a response to the query from the AI model 550, and provide the response to the user.

According to an embodiment, the AI model 550 may include a generative artificial intelligence (AI) model 550 (e.g., the generative AI model 450 of FIG. 4A) or a large language model (LLM), which is an artificial intelligence model that learns from various data and generates new information and sentences. For example, the AI model 550 may include an on-device AI model implemented on an electronic device (e.g., the electronic device 101 of FIG. 1 or the electronic device 210 of FIG. 2) and a server AI model implemented by an external server (e.g., the intelligent server 230 of FIG. 2), and the server AI model may be implemented and operated in a server of a manufacturer of the electronic device, or may be implemented and operated by a third party. The electronic device may select an AI model 550 configured by the user among available AI models 550 and transfer a user input to the AI model, and/or may select an AI model 550 from which a response is to be requested, based on the type or content of a query of a user input, and transfer the user input to the AI model.

According to an embodiment, the prompt manager 500 may perform various operations for generating a prompt (or a secondary prompt) from a user input (or a primary prompt). For example, the prompt manager 500 may receive a user input including a query to the AI model 550, validate the user input, based on the number of parameters included in the user input, and when the user input fails to pass the validation, generate a prompt, based on a prompt template and pre-stored user data. Since a prompt generated by the prompt manager 500 includes various information compared to an initial user input, and the included information is based on user data, the AI model 550 may provide more accurate and detailed information desired by the user as a response when the prompt is input to the AI model 550.

According to an embodiment, the prompt manager 500 may be implemented on an electronic device to generate a prompt according to a user input and then provide the prompt to the AI model 550, may be implemented on a server-type AI model to generate a prompt according to a user input that is input to the AI model 550, and/or may be implemented on a separate server device to receive a user input through a network, then generate a prompt, and transfer the prompt to the AI model 550.

Hereinafter, although the prompt manager 500 that evaluates a user input and generates a new prompt is described as being implemented on an electronic device that obtains the user input, various embodiments of the disclosure are not limited thereto, and embodiments described below may be provided by various devices such as a server device rather than the electronic device.

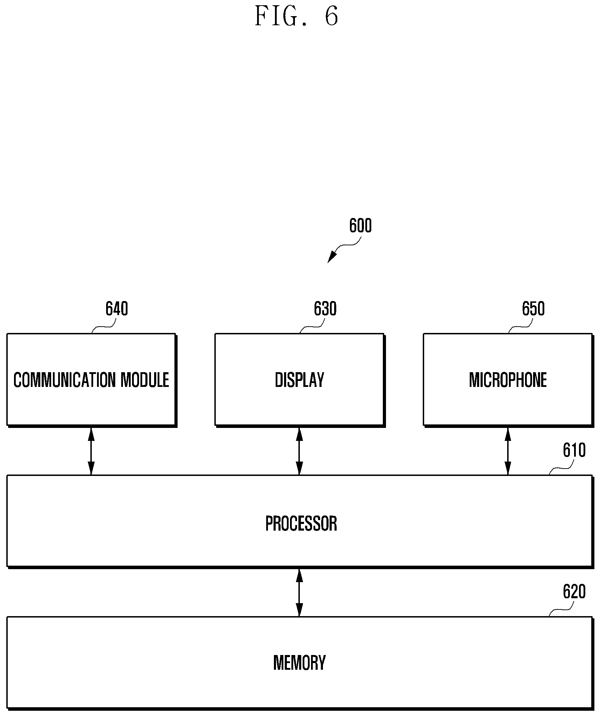

FIG. 6 is a block diagram of an electronic device according to an embodiment.

Referring to FIG. 6, an electronic device 600 may include a communication module 640, a display 630, a microphone 650, a processor 610, and a memory 620. In various embodiments of the disclosure, some of the illustrated components may be omitted or replaced. The electronic device 600 may include at least some of components and/or functions of the electronic device 101 of FIG. 1 and/or the electronic device 210 of FIG. 2. At least some of the illustrated (not illustrated) components of the electronic device 600 may be operatively, functionally, and/or electrically connected to each other.

In an embodiment, hardware components of the electronic device 600 being operatively, functionally, and/or electrically connected may refer to that a direct connection or an indirect connection between the hardware components is established in a wired manner or in a wireless manner so that a second hardware component is controlled by a first hardware component among the hardware components.

According to an embodiment, the display 630 may display various images provided from the processor 610. For example, the display 630 may be implemented as any one of a liquid crystal display (LCD), a light-emitting diode (LED) display, an organic light-emitting diode (OLED) display, a micro electro mechanical systems (MEMS) display, or an electronic paper display, but is not limited thereto. The display 630 may be configured as a touch screen for detecting a touch and/or a proximity touch (or hovering) input using a body part of a user (e.g., a finger) or an input device (e.g., a stylus pen). The display 630 may include at least some of components and/or functions of the display module 160 of FIG. 1.

According to an embodiment, the display 630 may provide various screens provided by a voice assistant (e.g., the voice assistant 590 of FIG. 5) in a form of a conversational user interface (UI). For example, the display 630 may display a response (e.g., text or a picture) including a task execution result of an AI model (e.g., the AI model 550 of FIG. 5 or the generative AI model 450 of FIG. 4A) corresponding to a user input, a prompt template (or sample prompt) selected according to a user input, and/or a prompt generated by a prompt manager (e.g., the prompt manager 500 of FIG. 5).

According to an embodiment, the microphone 650 may collect an external sound such as a user's voice and convert the external sound into a voice signal that is digital data. According to an embodiment, the electronic device 600 may include a microphone in a part of a housing (not shown), or may receive a voice signal collected by an external microphone connected in a wired or wireless manner. According to an embodiment, the voice signal obtained by the microphone 650 may be transferred to the processor 610, and the processor 610 (or the voice assistant) may convert the voice signal into text information through automatic speech recognition (ASR) and perform an operation corresponding to the text information.

According to an embodiment, the communication module 640 may support wireless communication with an external device, using cellular wireless communication (e.g., 4G long term evolution (LTE) or 5G new radio (NR)) and/or short-range wireless communication (e.g., Wi-Fi). For example, the electronic device 600 may communicate, by using the communication module 640, with an external server (e.g., the intelligent server 230 of FIG. 2) that provides a voice assistant function through a network. The communication module 640 may include at least some of components and/or functions of the communication module 190 of FIG. 1 and/or the communication interface 213 of FIG. 2.

According to an embodiment, the memory 620 may temporarily or permanently store various data by including a volatile memory and a non-volatile memory. The memory 620 may include at least some of components and/or functions of the memory 130 of FIG. 1 and/or the memory 215 of FIG. 2 and may store the program 140 of FIG. 1. The memory 620 may store various applications (e.g., the first app 219a and the second app 219b of FIG. 2) and a program module (e.g., the client module 218 of FIG. 2) supporting an intelligent service.

According to an embodiment, the memory 620 may store various instructions that are executable by the processor 610. Such instructions may include control commands such as arithmetic and logical operations, data transfer, and/or input/output, which are recognizable by the processor 610.

According to an embodiment, the processor 610, is a component capable of performing operations or data processing related to control and/or communication of respective components of the electronic device 600, and may include one or more processors. The processor 610 may include at least some of the components and/or functions of the processor 120 of FIG. 1 and/or the processor 214 of FIG. 2.

According to an embodiment, functions of operations and data processing that the processor 610 is capable of implementing on the electronic device 600 are not limited. However, in the disclosure, various embodiments of generating a prompt, based on a prompt template and user data, according to a user input will be described in the disclosure. Operations of the processor 610 to be described later may be performed by loading instructions stored in the memory 620.

In the disclosure, a description that the processor 610 is capable of performing a certain operation (or function, work, or task) may be interpreted as substantially equivalent to that an instruction (or command, or computer program) for causing the electronic device 600 (or the processor 610) to perform the corresponding operation is stored in the memory 620 (e.g., a non-volatile memory or a storage). In addition, a description that the processor 610 is capable of performing a certain operation may be interpreted as substantially equivalent to that at least one processor without limitation is capable of performing the corresponding operation.

According to an embodiment, the memory 620 may store user data related to a user of the electronic device 600. For example, the user data may include personal information such as a name, a gender, an age, and an occupation of the user, location information, call/message records, a schedule, an application usage history, a user profile configured by the user (e.g., a name, a gender, an age, and an occupation), and/or device information of the electronic device 600. According to an embodiment, the processor 610 may store, as the user data in the memory 620, data of a specified type among data obtained from respective applications or data input by the user, and may update the user data when the user data is changed (e.g., movement of the electronic device 600).

According to an embodiment, the memory 620 may store various prompt templates. Here, the prompt templates define formats of text provided as an input when an AI model is used, and may include an example of information that enables the AI model to provide a higher-quality response. The prompt template may also be referred to as a sample prompt. According to another embodiment, the prompt templates may be stored in an external server (e.g., the intelligent server 230 of FIG. 2), and the electronic device 600 may receive at least one of the prompt templates from the external server through the communication module 640.

According to an embodiment, each prompt template may include at least one input field. The input field may refer to a portion in a sentence into which a specific word is insertable. For example, a prompt template related to a travel topic may be "Recommend travel destinations worth visiting in (duration) in (location). Please express in (output language)," and the duration, the location, and the output language may be designated as respective input fields.

According to an embodiment, prompt templates may include persona templates, task-specific templates, and few-shot templates. The persona templates may include templates of prompts that define a role of a responder for a query input in a conversational session. The task-specific templates may include templates of prompts that indicate a format or an operation process required for an AI model to perform a specific task. The few-shot templates may include predefined few-shot examples that are operable well for a specific task.

According to an embodiment, the processor 610 may analyze text of a user input to determine whether generation of a new prompt is required. For example, the processor 610 may determine, according to information included in the text of the user input, whether to input the user input to an AI model without change or to generate a new prompt, based on a prompt template and then input same to the AI model.

According to an embodiment, the processor 610 may identify the number of parameters included in the user input among a plurality of pre-determined parameters. The parameters may include information such as a reader level, a response length, a responder perspective, an output format, and an output language. According to an embodiment, when the number of parameters identified in the user input is less than a reference number, the processor 610 may determine that a response intended by the user is not obtainable through the AI model, and when the number of parameters is equal to or greater than the reference number, may determine that the response intended by the user is obtainable through the AI model.

According to an embodiment, the processor 610 may analyze a query included in the user input to determine parameters required for the evaluation. For example, when the user input includes a query related to travel, the processor may determine a sentence length, a location, a date, a duration, participants, and whether emphasis is included as parameters, and may identify whether the query of the user includes the parameters.

According to an embodiment, when the number of parameters identified in the user input is equal to or greater than the reference number, the processor 610 may transfer the user input to the AI model without performing a prompt generation operation based on a prompt template and user data.

According to an embodiment, when the number of parameters identified in the user input is less than the reference number, the processor 610 may generate a prompt by using a prompt template and user data.

According to an embodiment, the processor 610 may calculate a score of the user input, based on parameters included in the user input and compare the calculated score with a reference value to determine whether to generate a prompt.

According to an embodiment, the processor 610 may select at least one of a plurality of prompt templates stored in the memory 620, based on the user input. For example, the processor 610 may analyze a sentence or words of the user input to determine a topic of a query of the user, and select a prompt template corresponding to the determined topic (e.g., travel, weather, or translation).

According to an embodiment, the processor 610 may identify at least one input field that is fillable by using information included in the user input, among input fields included in the selected prompt template. For example, each prompt template may include input fields into which a word is inputtable, and the processor 610 may identify a word, among words included in the user input, that is inputtable into each input field. The processor 610 may input a word included in the user input into the input field.

According to an embodiment, the processor 610 may identify at least one input field that is not fillable by using information included in the user input, among input fields included in the selected prompt template. For example, the processor 610 may identify at least one input field that is not fillable, through a word included in the user input.

According to an embodiment, the processor 610 may fill at least one input field that is not fillable by using information included in the user input, based on user data stored in the memory 620. For example, when a query of the user input is related to travel recommendation, the processor may fill the input field, based on a travel schedule obtained from a calendar application, the number of people for travel obtained from an SNS or a message application, a travel destination preferred by the user, and/or personal information of the user.

According to an embodiment, the processor 610 may provide, through the display 630, a guide UI for indicating the user to provide an additional user input for an input field that is not fillable based on user data. For example, when information related to a role of a responder, a departure date, or an output language among input fields of a prompt template fails to be obtained from a query of the user input or pre-stored user data, the processor may induce the user to input the information. The processor 610 may generate a completed prompt by additionally filling an input field of the prompt template, based on an additional input of the user responding to the guide UI.

According to an embodiment, the processor 610 may input a prompt generated based on a selected prompt template and user data to an AI model. Since the generated prompt includes a more detailed query compared to the user input, a response of the AI model may include more detailed information reflecting an intent of the user.

According to an embodiment, the processor 610 may provide at least one selected prompt template to the user through the display 630. In this case, the processor 610 may not generate a new prompt, based on stored user data, and may allow the user to directly provide a new user input according to the prompt template, or may provide, through the display 630, the prompt template and a prompt generated based on the prompt template and the user data.

According to an embodiment, the processor 610 may provide, through the display 630, a user interface for configuring a detail level indicating a degree of detail of a response of an AI model. For example, when the detail level is configured to be high (e.g., high level), the processor 610 may add a large amount of content to an input field of a prompt and configure a response length to be long so as to enable the AI model to include detailed information. When the detail level is configured to be low (e.g., low level), the processor 610 may add only some essential content to an input field of a prompt and configure a response length to be short so as to enable the AI model to include brief information.

According to an embodiment, the processor 610 may determine whether generation of a new prompt is required according to a user input, based on a detail level configured through a user interface. For example, when the detail level is configured to be high, the processor 610 may configure a reference number to be higher, thereby increasing a frequency of prompt generation using a prompt template. That is, when the detail level is configured to be high, only when a user input includes relatively more information, the processor may use the user input as an input to the AI model without change. When the detail level is configured to be low, the processor may configure the reference number to be lower and, even when the user input includes relatively brief information, input the user input to the AI model without generating a prompt.

Instructions for performing operations of the electronic device 600 (or the processor 610) described above may be stored in a computer-readable recording medium. The recording medium may be tangible and non-transitory. The recording medium may store at least one computer program including the instructions.

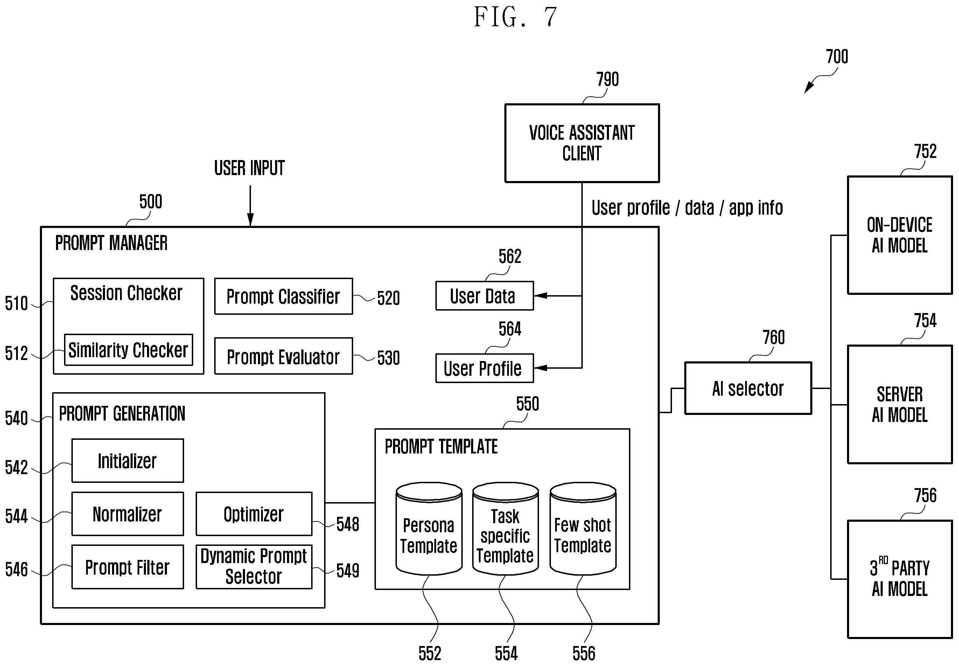

FIG. 7 is a block diagram of a prompt generation system according to an embodiment.

According to an embodiment, a prompt generation system 700 may include a voice assistant client 790, a prompt manager 500, and an AI selection module 760. Each module illustrated in FIG. 7 may be configured as separate hardware or may be a software module executable by the electronic device 600 (e.g., the processor 610).

According to an embodiment, the voice assistant client 790 may obtain a user profile 564 or user data 562 from an electronic device (e.g., the electronic device 600 of FIG. 6) and transfer same to the prompt manager 500. For example, the voice assistant client 790 may obtain a user profile configured by the user, and text, image data, application information, and/or activity information, which are stored in the electronic device, and transfer same to the prompt manager 500.

According to an embodiment, the user profile 564 may include personal information such as a name, a gender, an age, and an occupation of a user configured by the user in the electronic device, and device information.

According to an embodiment, the user data 562 is data recorded according to use of an application of the electronic device, and may include, for example, data such as location information, a call/message record, a schedule, and an application usage history. In the disclosure, the user profile 564 and the user data 562 may not be distinguished, and data related to a user recorded in a memory (e.g., the memory 620 of FIG. 6) of the electronic device may be referred to as the user data 562.

According to an embodiment, the prompt manager 500 may store various prompt templates 550 (or sample prompts), or may obtain prompt templates 550 stored in an external server. For example, the prompt templates 550 may include persona templates 552, task-specific templates 554, and few-shot templates 556.

According to an embodiment, the persona templates 552 may include templates of prompts that define a role of a responder for a query input in a conversational session. For example, when the user asks a question related to travel, a role of a responder may be designated by inputting "you are a travel agency staff" in a prompt, or when the user provides a query related to translation, a role of an AI model may be designated by inputting "you are a translator translating Korean into English" in a prompt. The persona templates 552 may include templates of prompts that designate a role of a responder of the AI model for various types of queries described above.

According to an embodiment, the task-specific templates 554 may include templates of prompts that indicate a format or an operation process required for the AI model to perform a specific task. For example, when the user provides a query related to mathematics, "Output should be Latex format?" may be input to request the AI model to respond to a complex formula in a predefined format. The task-specific templates may include templates of prompts capable of inducing responses of the AI model for various topics.

According to an embodiment, the few-shot templates 556 may include predefined few-shot examples that are operable well for a specific task. For example, by using content of news article A and summary S of the news article, an example of a task to be performed by the user in the AI model may be input as "input(A), output(S)." The few-shot templates 556 may include templates of prompts including few-shot examples that are inputtable to the AI model in relation to queries of various topics described above.

According to an embodiment, the prompt manager 500 may perform various operations for generating a prompt from a user input. For example, the prompt manager 500 may receive a user input including a query to an AI model, validate the user input, based on the number of parameters included in the user input, and when the user input fails to pass the validation, generate a prompt, based on a prompt template and the pre-stored user profile 564 and user data 562.

According to an embodiment, the prompt manager 500 may receive a user input. For example, the user input may include a text input using a keypad or a keyboard, or a voice input via a microphone. When the user input includes a voice input, the voice assistant client 790 may convert voice data into text data through automatic speech recognition (ASR) and transfer the text data to the prompt manager 500.

According to an embodiment, the prompt manager 500 may include a session check module 510, a prompt classification module 520, a prompt evaluation module 530, and a prompt generation module 540, and the prompt manager 500 of each module may manage a workflow. In addition, the prompt manager 500 may store the user data 562, the user profile 564, and the various prompt templates 550, and/or may obtain the user data 562, the user profile 564, and the various prompt templates 550 stored in a memory.

According to an embodiment, the session check module 510 (or a session checker) may analyze content of a user input to determine whether to maintain a current session for a query-response with an AI model or to configure a new session. A session may be identified as a series of units in which an interaction between the user and the AI model occurs. According to an embodiment, the session check module 510 may include a similarity check module 512 (or a similarity checker) that compares content of a current user input with a list of previous user inputs (or prompts) in a current session to determine whether the content of the current user input is similar to the previous user inputs.

According to an embodiment, the prompt classification module 520 (or a prompt classifier) may classify which type of prompt generation module 540 needs to be used for an input sentence of a user input. For example, the prompt classification module 520 may classify a current user input according to a topic of a query (e.g., travel, weather, or translation), and the prompt generation module 540 may generate a new prompt by calling the user data 562 and a prompt template according to the topic classified by the prompt classification module 520.

According to an embodiment, the prompt evaluation module 530 (or a prompt evaluator) may evaluate whether a high-quality result intended by the user is obtainable from a response of an AI model when a user input is input to the AI model. For example, the prompt evaluation module 530 may identify the number of parameters included in a user input among a plurality of pre-determined parameters. The parameters may include information such as a reader level, a response length, a responder perspective, an output format, and an output language. According to an embodiment, when the number of parameters identified in the user input is less than a reference number, the prompt evaluation module 530 may determine that a response intended by the user is not obtainable through the AI model, and when the number of parameters is equal to or greater than the reference number, may determine that the response intended by the user is obtainable through the AI model.

According to an embodiment, the prompt evaluation module 530 may determine parameters required for evaluation, based on a query of the user. For example, when the user input includes a query related to travel, the processor may determine a sentence length, a location, a date, a duration, participants, and whether emphasis is included as parameters, and may identify whether the query of the user includes the parameters.

According to an embodiment, the prompt generation module 540 may generate a prompt to be input to an AI model, based on the user profile 564, the user data 562, and at least one prompt template, according to a user input. According to an embodiment, the prompt generation module 540 may include an initialization module 542, a normalization module 544, an optimization module 548, a prompt filter 546, and a dynamic prompt selection module 549.

According to an embodiment, the initialization module 542 (or an initializer) may generate a prompt for a user input by using a prompt template. For example, the initialization module 542 may select at least one prompt template related to a query of a user input among a plurality of prompt templates, and may fill an input field of the prompt template by using a word included in the user input and/or the user data 562.

According to an embodiment, the normalization module 544 (or a normalizer) may normalize input text determined to be unnecessary for task execution of an AI model. For example, the normalization module 544 may distinguish, in text of a user input, between information required by the AI model to generate a response and unnecessary information and may filter out the unnecessary information.

According to an embodiment, the optimization module 548 (or an optimizer) may reduce a length of a prompt generated by the initialization module 542 or convert the prompt into a prompt format optimized for a task, in order to reduce a call cost of an AI model.

According to an embodiment, the prompt filter module 546 (or a prompt filter) may filter sensitive information (e.g., harmful words, discriminatory content, or sexual content) or content not supported by an AI model from a generated prompt.

According to an embodiment, the dynamic prompt selection module 549 (or a dynamic prompt selector) may add examples such as few-shot examples required for a prompt to the prompt.

According to an embodiment, the AI selection module 760 (or an AI selector) may determine at least one of AI models 752, 754, and 756 to which a prompt generated through the prompt manager 500 is to be transferred. For example, according to a selection of the AI selection module 760, the generated prompt may be transferred to at least one of an on-device AI model 752, a server AI model 754, or a 3^{rd} party AI model 756, and the AI model may receive the prompt, perform a task related to a query of the user, and provide a response including a result value of the performance to the electronic device.

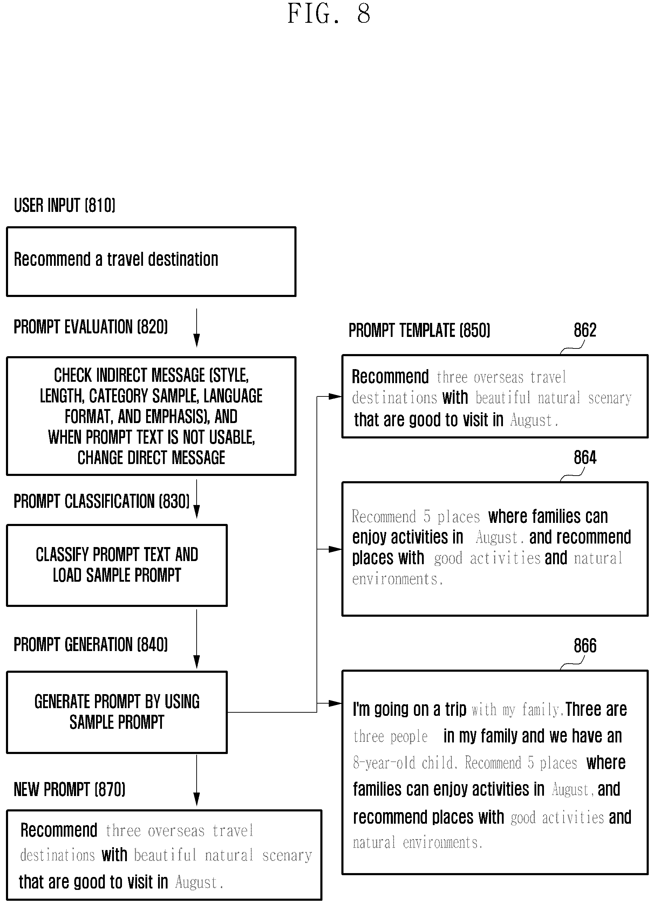

FIG. 8 illustrates an example of generating a prompt from a user input according to an embodiment.

According to an embodiment, an electronic device (e.g., the electronic device 600 in FIG. 6) may receive a user input 810 including a query through a text input or a voice input. For example, the user input may include a text input such as "Recommend a travel destination." According to an embodiment, the electronic device may determine text of the user input 810 as an initial prompt (or a primary prompt), and may perform an evaluation and new prompt (or a second prompt) generation operation for the initial prompt by using a prompt manager (e.g., the prompt manager 500 in FIG. 7).

According to an embodiment, a prompt evaluation module 820 (e.g., the prompt evaluation module 530 in FIG. 7) may evaluate whether an intended response result is obtainable when the user input is input to an AI model. The prompt evaluation module 820 may identify the number of parameters included in the user input among a plurality of pre-determined parameters, and may evaluate the user input by comparing the number of parameters with a reference number. For example, the prompt evaluation module 820 may identify, from the user input, a style of a sentence, a length, whether the user input corresponds to a corresponding category sample, a language format, and/or whether an emphasis is included. "Recommend a travel destination," which is text of the user input 810, belongs to a travel category and does not include a parameter required in the travel category, such as a location or a time period, and thus the AI model may recommend a travel destination in a comprehensive manner. The prompt evaluation module 820 may determine that generation of a new prompt is required, based on an evaluation result, and may transfer the user input to a prompt classification module 830 or a prompt generation module 840.

According to an embodiment, the prompt classification module 830 (e.g., the prompt classification module 520 in FIG. 7) may classify which type of prompt generation module 840 needs to be used for an input sentence of the user input. For example, the prompt classification module 830 may analyze a topic of a query as travel, based on user input text, and may load a prompt template related to travel (or a sample prompt) among pre-stored prompt templates 850.

According to an embodiment, the prompt classification module 830 may call at least one prompt template corresponding to a level configured by the user among the prompt templates 850. For example, the prompt classification module 830 may determine a category for a response based on an intent of the user, such as travel recommendation, weather, or music recommendation, and may load a prompt template based on each category and provide the prompt template to the user as a guide, or may search for a prompt template of an appropriate level according to a level configuration value configured by the user through a user interface and transfer the prompt template to the prompt generation module 840.

According to an embodiment, the prompt generation module 840 (e.g., the prompt generation module 540 in FIG. 7) may generate a prompt, based on a prompt template. The prompt generation module 840 may fill an input field of a loaded prompt template, based on user data. Referring to FIG. 8, when a detail level is configured as a low level, a prompt template configured to have a low level is loaded, and natural scenery that is an interest of the user and August according to a travel itinerary, which are identified from user data, are input to an input field, so that a first prompt 862, "Recommend three overseas travel destinations with beautiful natural scenery that are good to visit in August," may be generated. When the detail level is configured as a middle level, a prompt template configured to have a middle level is loaded, and information is input to an input field, based on user data, so that a second prompt 862, "Recommend 5 places where families can enjoy activities in August and recommend places with good activities and natural environments," may be generated. When the detail level is configured as a high level, a prompt template configured to have a medium level is loaded, and information such as a traveling family, the number of family members 3, and an age of a child is input to an input field, based on user data, so that a third prompt 866, "I'm going on a trip with my family. There are three people. In my family and we have an 8 years old child. Recommend 5 places where families can enjoy activities in August and recommend places with good activities and natural environments," may be generated.

According to an embodiment, the user may configure a low level as a detail level of a prompt by a user interface, and in this case, a prompt may be generated by using a prompt template corresponding to the low level. As a result, the electronic device may determine the first prompt 862 generated by using a prompt template corresponding to the low level as a new prompt 870 corresponding to the user input 810, and may input the new prompt 870 to an AI model (e.g., the generative AI model in FIG. 4A, or the AI model 550 in FIG. 5).

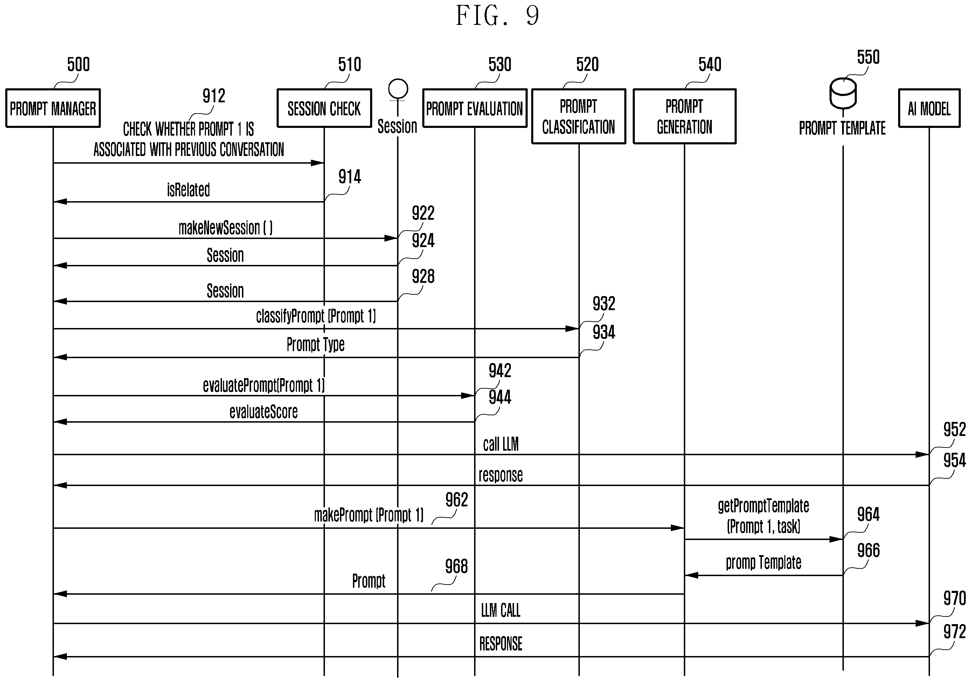

FIG. 9 is a sequence diagram of a prompt generation method according to an embodiment.

In the following embodiment, operations described below may be performed sequentially, but are not necessarily performed sequentially. For example, an order of the operations may be changed, and at least two operations may be performed in parallel. According to an embodiment, the prompt manager 500 (e.g., the prompt manager 500 in FIG. 7) may receive a user input for an AI model (e.g., the AI model 752, 754, or 756 in FIG. 7). The prompt manager 500 may generate prompt 1 by using text information of the user input.

According to an embodiment, in operation 912, the prompt manager 500 may analyze a query of the user input (or prompt 1) to identify whether the query is associated with conversation content of a previous session, through the session check module 510 (e.g., the session check module 510 in FIG. 7). In operation 914, the session check module 510 may compare a similarity between the query of the user input and the conversation content of the previous session with a threshold value, and may return the similarity (or isRelated) to the prompt manager 500. The similarity may be determined as true or false.

According to an embodiment, when the query of the user input is not associated with the conversation content of the previous session, in operation 914, the session check module 510 (the session check module 510 in FIG. 7) may return "isRelated == false" to the prompt manager 500. In this case, in operation 922, the prompt manager 500 may request generation of a new session, and in operation 924, may obtain new session information.

According to an embodiment, when the query of the user input is associated with the conversation content of the previous session, in operation 912, the session check module 510 may return "isRelated == true" to the prompt manager 500. In this case, in operation 928, the prompt manager 500 may obtain existing session information, and may perform a prompt generation operation based on a prompt template, based on the user input within an existing session.

According to an embodiment, in operation 932, the prompt manager 500 may call classifyPrompt (prompt 1) of the prompt classification module 520 to identify a type of a task to be performed by the user input in the prompt classification module 520 (or prompt 1). In operation 934, the prompt classification module 520 may classify the user input as a task having the highest similarity among tasks that the prompt manager 500 is able to generate, and return a corresponding prompt type to the prompt manager 500. For example, the prompt classification module 520 may classify the current user input according to a subject of a query (e.g., travel, weather, translation).

According to an embodiment, in operation 942, the prompt manager 500 may call evaluatePrompt (prompt 1) of the prompt evaluation module 530 to determine whether generation of an additional prompt is necessary for the user input (or prompt 1). In operation 944, the prompt evaluation module 530 may evaluate the user input according to a predefined criterion, and return an evaluateScore to the prompt manager 500. For example, the prompt evaluation module 530 may identify the number of parameters included in the user input among multiple pre-determined parameters, determine that generation of an additional prompt is necessary when the number is less than a reference number, and determine that generation of an additional prompt is not necessary when the number is greater than or equal to the reference number. The reference number may be determined according to a type of the user input, an amount of included information, and/or a detail level configured by the user.

According to an embodiment, when the evaluateScore is greater than or equal to a reference value, the prompt manager 500 may identify that generation of an additional prompt is not necessary, and in operation 952, input the user input (or prompt 1) to the AI model without change. In operation 954, the AI model may process a query for the user input and respond to the prompt manager 500.

According to an embodiment, when evaluateScore is less than the reference value, the prompt manager 500 may identify that generation of an additional prompt is necessary, and in operation 962, call makePrompt(prompt 1) of the prompt generation module 540 (e.g., the prompt generation module 540 of FIG. 7) for generation of a new prompt.

According to an embodiment, in operation 964, the prompt generation module 540 may call getPromptTemplate() to obtain a prompt template corresponding to the user input among pre-stored prompt templates 550, and, in operation 966, may obtain at least one prompt template among the pre-stored prompt templates.

According to an embodiment, the prompt generation module 540 may reconstruct the prompt, based on the obtained at least one prompt template to generate a new prompt (or prompt 2). According to an embodiment, the prompt generation module may generate a prompt to be input to the AI model, according to a user profile, user data, and the at least one prompt template, based on the user input. For example, the prompt generation module 540 may fill an input field of a loaded prompt template based on a word included in the user input, and/or user data pre-stored in an electronic device. In operation 968, the prompt generation module 540 may transfer the generated prompt to the prompt manager 500.

According to an embodiment, in operation 970, the prompt manager 500 may input the prompt generated by the prompt generation module 540 to the AI model (or large language model (LLM)), and, in operation 972, may obtain a response corresponding to the prompt from the AI model.

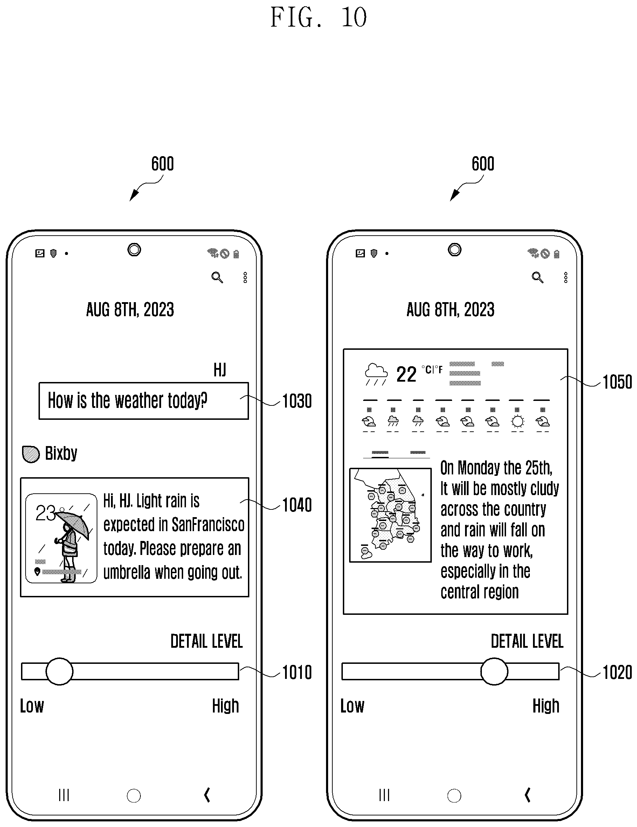

FIG. 10 illustrates a user interface for configuring a detail level of a response of an AI model according to an embodiment.

According to an embodiment, the electronic device 600 (e.g., the electronic device 600 of FIG. 6) may provide, through a display (e.g., the display 630 of FIG. 6), a user interface that allows the user to configure a detail level of a response of an AI model. The detail level may match an amount of information or a degree of detail provided in the response of the AI model (e.g., the on-device AI model 752 or the server-type AI model 754) for an input prompt. According to an embodiment, the electronic device 600 may determine information to be included in a prompt to induce a response of the AI model according to a detail level configured through the user interface.

According to an embodiment, the electronic device 600 may provide, through the user interface, examples 1040 and 1050 of responses that are providable by the AI model according to the detail level for an example sentence 1030.

Referring to FIG. 10, when the user makes a query 1030 as "How is the weather today?," examples of responses of the AI model are shown. As shown in FIG. 10, when the user configures the detail level to be low through a user interface 1010, the electronic device 600 (or the prompt manager) may generate a prompt and input the prompt to the AI model by adding a smaller number of input fields among input fields of a prompt template and/or configuring a response length to be short, so that the AI model provides brief information 1040, such as a temperature of a current region and whether precipitation occurs, as a response.

In contrast, when the user configures the detail level to be high through a user interface 1020, the electronic device 600 (or the prompt manager) may generate a prompt and input the prompt to the AI model by adding a larger number of input fields among input fields of a prompt template and/or configuring a response length to be long, so that the AI model provides detailed information 1050 related to the query of the user, such as a probability of precipitation, humidity, wind speed, a daily probability of precipitation, and an hourly probability of precipitation, as a response.

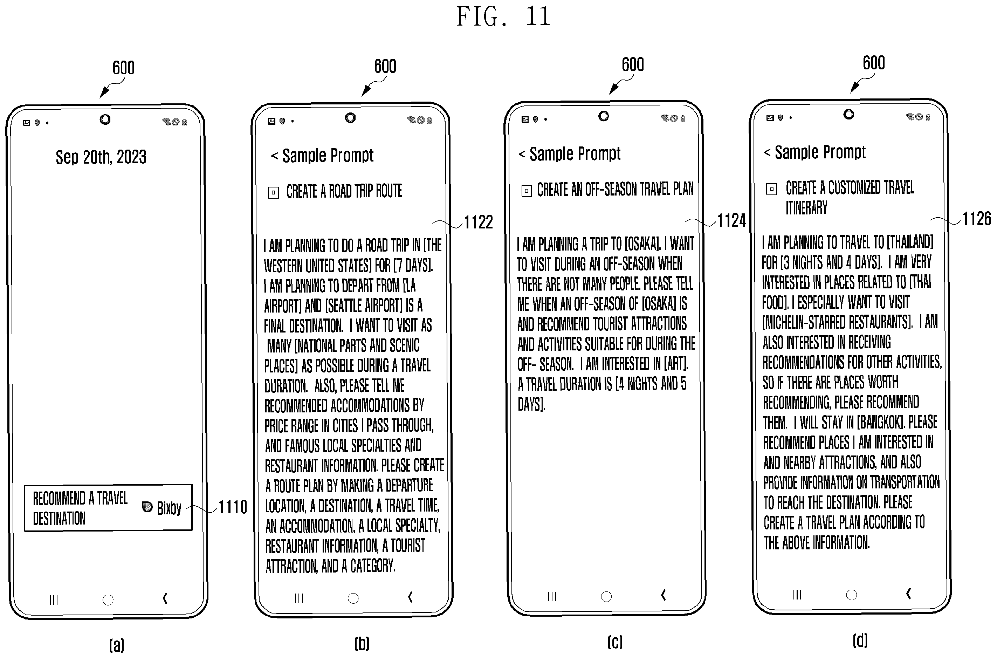

FIG. 11 illustrates a user interface displaying a sample prompt according to an embodiment.

According to an embodiment, the electronic device 600 (e.g., the electronic device 600) may, according to a user input, extract at least one prompt template related to a query of the user input among multiple prompt templates pre-stored in the electronic device or an external server, and provide the extracted at least one prompt template to the user through a display. In this case, the electronic device 600 may display example phrases of input fields required for prompt generation to be distinguished from other words.

Referring to (a) of FIG. 11, the user may input a query "Recommend a travel destination" by using a voice assistant. The electronic device may convert the input speech of the user into text, and display converted user input text 1110 on the display.

According to an embodiment, the electronic device 600 (e.g., a prompt classification module) may, based on the user input, identify a prompt template (or a sample prompt) 1122 having a title "Create a road trip route" as shown in (b) of FIG. 11, and provide the prompt template through the display. In this case, the electronic device 600 may display "the western United States, 7 days, LA airport, Seattle airport, national parks and scenic places," which is information corresponding to an input field required to be filled by the user, by using a distinguishable symbol such as a parenthesis.

Alternatively, the electronic device 600 may identify a prompt template 1124 of "Create an off-season travel plan" as shown in (c) of FIG. 11, or a prompt template 1126 having a title "Create a customized travel itinerary" as shown in (d) of FIG. 11, and provide the prompt templates to the user through the display.

As described above, when providing the prompt templates 1122, 1124, and 1126 to the user, the user may input information required to obtain a high-quality response result of AI by referring to the templates, in text or voice.

According to an embodiment, while at least one prompt template is displayed on the display, when a user input for any one prompt template is received, the electronic device 600 may generate a prompt by using a selected prompt template. For example, when the prompt template of (b) of FIG. 11 is selected by the user, the electronic device 600 may identify information, such as a travel destination, a duration, and a departure/arrival airport, from user data stored in the electronic device 600, and input the identified information into input fields to generate a prompt.

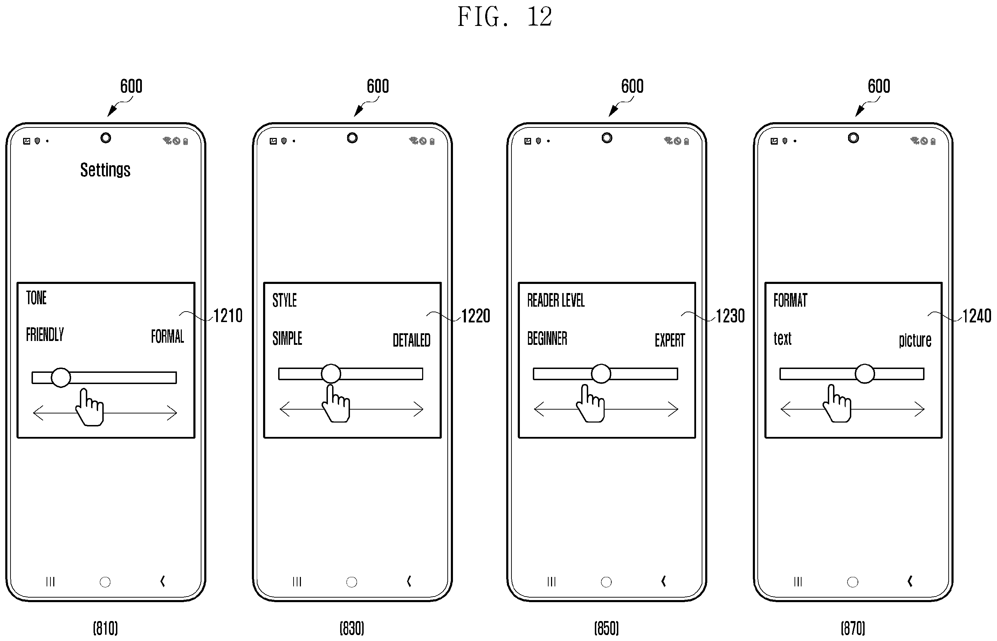

FIG. 12 illustrates a user interface for configuring a prompt-related parameter according to an embodiment.

According to an embodiment, the electronic device 600 (e.g., the electronic device 600 of FIG. 6) may provide, through a display, user interfaces 1210, 1220, 1230, and 1240 for configuring parameters required for prompt generation. The electronic device 600 may generate prompt text according to a criterion configured through the user interface 1210, 1220, 1230, and 1240, and input the prompt text to an AI model.

Referring to (a) of FIG. 12, the electronic device 600 may provide the user interface 1210 for configuring a tone of a response of the AI model. The user interface 1210 may include an adjustment bar enabling selection of a level between a friendly tone or a formal tone. The electronic device 600 may configure an input field related to a tone in a prompt according to a level configured by the user through the user interface 1210.

Referring to (b) of FIG. 12, the electronic device 600 may provide the user interface 1220 for configuring a style of a response of the AI model. The user interface 1220 may include an adjustment bar enabling selection of a level between a simple style or a detailed style. The electronic device 600 may configure an input field related to a style of a response in a prompt according to a level configured by the user through the user interface 1220.

Referring to (c) of FIG. 12, the electronic device 600 may provide the user interface 1230 for configuring a reader level of the AI model. The user interface 1230 may include an adjustment bar enabling selection of a level between a beginner level and an expert level (or between a child level and an adult level). The electronic device 600 may configure an input field related to a reader level in a prompt according to a level configured by the user through the user interface 1230.

Referring to (d) of FIG. 12, the electronic device 600 may provide the user interface 1240 for configuring an output format of a response of the AI model. The user interface 1240 may include an adjustment bar enabling selection of a level between text or picture. The electronic device 600 may configure an input field related to an output format in a prompt according to a level configured by the user through the user interface 1240.

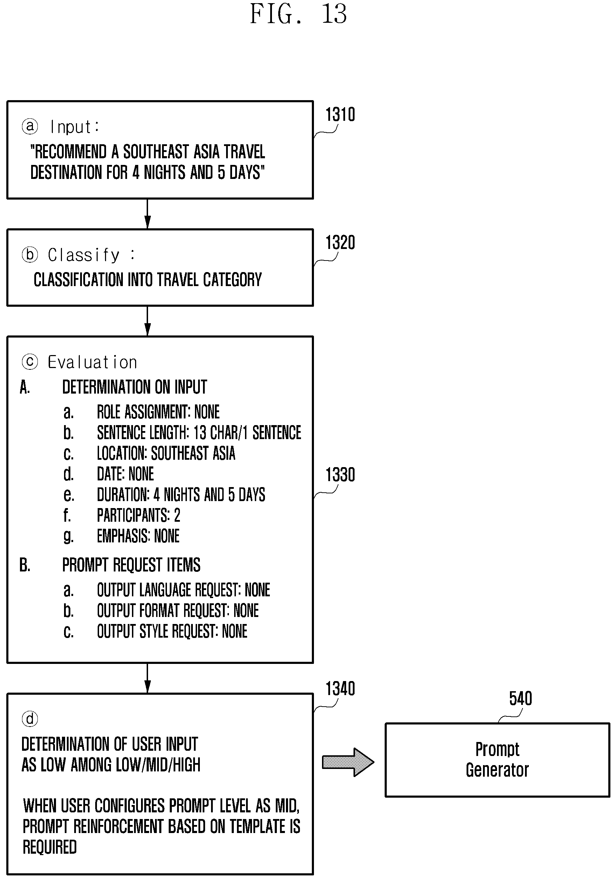

FIG. 13 illustrates an example of generating a prompt from a user input according to an embodiment.

Referring to FIG. 13, a user may input, through a voice assistant, "Recommend a Southeast Asia travel destination for 4 nights and 5 days" as a user input for an AI model in text or voice. In operation 1310, an electronic device may convert the user input into text data through automatic speech recognition (ASR) to obtain user input text.

According to an embodiment, in operation 1320, the electronic device (e.g., the electronic device 600 of FIG. 6) (or the prompt classification module 520 or prompt classifier) may analyze content of a query of the user input and classify the query into a travel category.

According to an embodiment, in operation 1330, the electronic device may evaluate whether a result intended by the user is obtainable from a response of the AI model when the user input is input to the AI model. The electronic device may evaluate the user input by comparing the number of parameters included in the user input among multiple parameters with a reference number.

According to an embodiment, the electronic device may determine parameters required for evaluation, based on the content of the query of the user input. For example, the electronic device may identify whether input data includes assignment of a role, a sentence length, a location, a date, a duration, participants, and an emphasis, as parameters for the travel category, and may identify whether the input data includes an output language, an output format, and an output style, as request items for the response of the AI model.

According to an embodiment, in operation 1340, when a result of identifying whether the user input includes the parameters indicates that information on assignment of a role, a date, an emphasis, an output language, an output format, and an output style is not included, the electronic device may determine that the number of the parameters is less than the reference number and determine a level of the information included in the user input as low. When the user configures a prompt level as middle, since the level of the current user input is low, the electronic device may determine that prompt reinforcement based on a prompt template or generation of a new prompt is required.

According to an embodiment, the electronic device may input the user input to the prompt generation module 540 (or a prompt generator), and the prompt generation module 540 may obtain a prompt template corresponding to the travel category of the user input, and generate a prompt by inputting, into the prompt template, an input field (e.g., assignment of a role or a date) not included in the user input, based on user data stored in the electronic device.

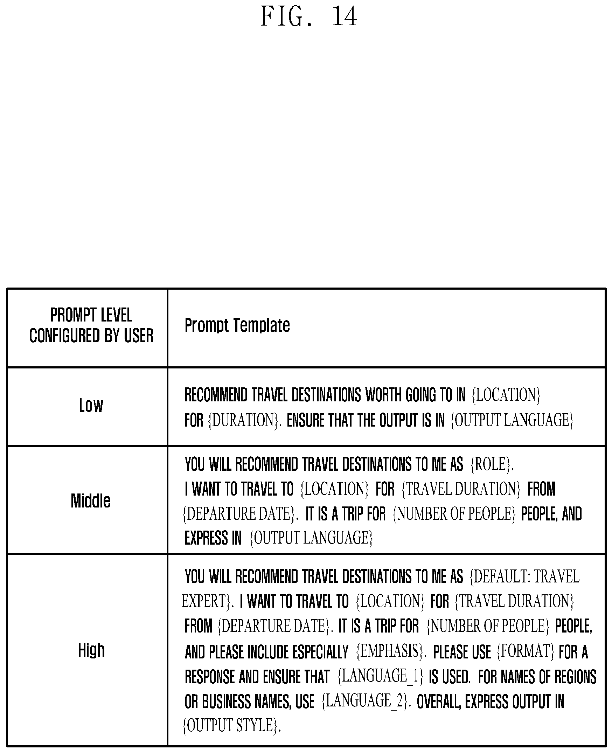

FIG. 14 shows a table illustrating an example of a prompt level configured by a user and a prompt template according to an embodiment.

According to an embodiment, an electronic device (e.g., the electronic device 600 of FIG. 6) may store multiple prompt templates and select at least one prompt template corresponding to a prompt level configured by a user among the multiple prompt templates.

For example, when a user input related to travel recommendation is input, a prompt template configured to have a prompt level of low may be configured by relatively short text including input fields of a duration, a location, and an output language.

A prompt template configured to have a prompt level of middle may be configured to have text relatively longer than that of the prompt template configured to have a prompt level of low, by including a role, a departure date, a travel duration, a location, the number of people, and an output language.

A prompt template configured to have a prompt level of high may be configured to have text relatively longer than those of the prompt templates configured to have prompt levels of low and middle, by including a role, a departure date, a travel duration, a location, the number of people, an emphasis, a format, two output languages, and an output style.

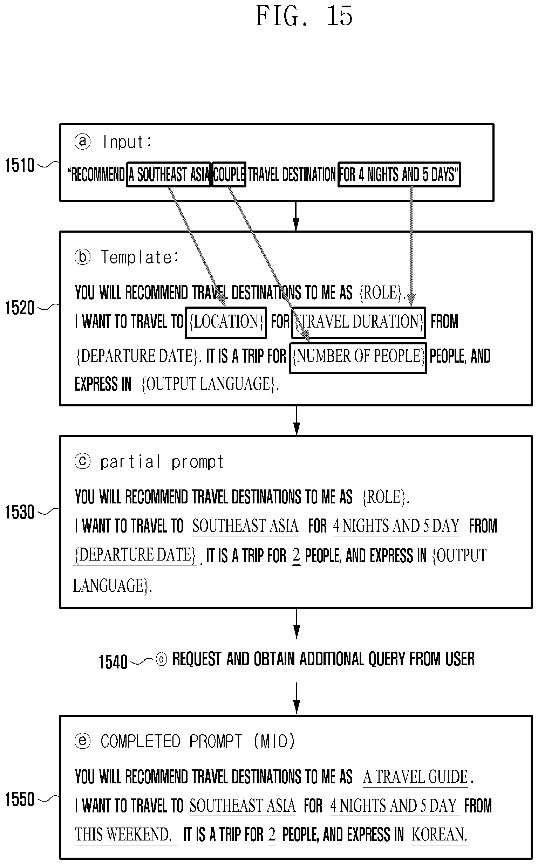

FIG. 15 illustrates an example of generating a prompt from a user input according to an embodiment.

Referring to the examples of FIG. 13 and FIG. 14, an electronic device (e.g., the electronic device 600 of FIG. 6) may evaluate a user input to determine that generation of a prompt is required, and call a prompt template having a middle level of a travel category.

A user may input, through a voice assistant, "Recommend a Southeast Asia couple travel destination for 4 nights and 5 days" as a user input for an AI model in text or voice. In operation 1510, the electronic device may convert the user input into text data through automatic speech recognition (ASR) to obtain user input text.

According to an embodiment, in operation 1520, the electronic device may identify an input field that is fillable from a query of the user input among input fields of the prompt template. For example, among the input fields, a travel duration may be inputtable from "4 nights and 5 days" among words of input data, a location may be inputtable from "Southeast Asia," and the number of people may be inputtable from "couple."

According to an embodiment, in operation 1530, the electronic device may generate a partial prompt by inputting at least some of the input fields of the prompt template from the words of the user input. Referring to a partial prompt of FIG. 15, input fields that is not fillable from the input data may include a role, a departure date, and an output language.

According to an embodiment, the electronic device may fill at least one input field not input from the user input in the partial prompt, based on user data. For example, the electronic device may obtain information such as a travel departure date from an application such as a calendar, a message, and SNS, and may obtain an output language of an AI model from a usage language of the user.

According to an embodiment, in operation 1540, the electronic device may request an additional query from the user for an input field that is not fillable from the user data. For example, when information related to a role of a responder, a departure date, or an output language among the input fields of the prompt template fails to be obtained from the query of the user input or pre-stored user data, the electronic device may induce the user to input the information.

According to an embodiment, in operation 1550, an electronic device may generate a completed prompt by additionally filling the input fields of the prompt template, based on an additional input of the user.

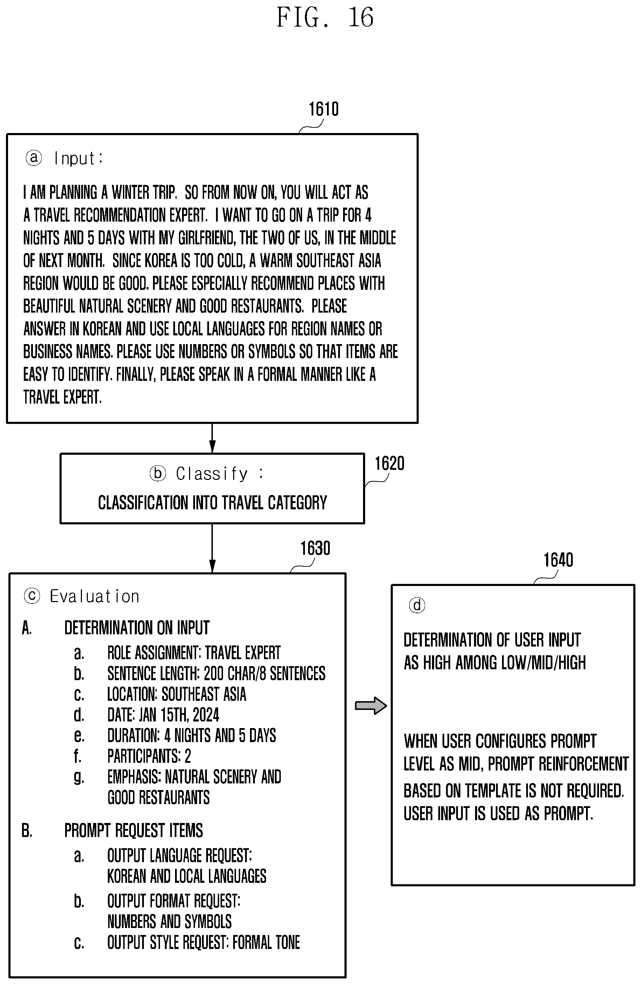

FIG. 16 illustrates an example of generating a prompt from a user input according to an embodiment.

According to an embodiment, an electronic device (e.g., the electronic device 600 of FIG. 6) may evaluate whether a high-quality result intended by a user is obtainable from a response of an AI model when a user input is input to the AI model. For example, a prompt evaluation module may identify the number of parameters included in the user input among multiple pre-determined parameters, determine that generation of a prompt is necessary when the identified number of parameters is less than a reference number, and determine to input the user input into the AI model without change when the number is greater than or equal to the reference number.

According to an embodiment, the user may input a user input including a detailed query related to a travel plan. In operation 1610, the electronic device may convert the user input into text data through automatic speech recognition (ASR) to obtain user input text.

According to an embodiment, in operation 1620, the electronic device may analyze content of the user input text to determine the user input text as a travel category.

According to an embodiment, in operation 1630, the electronic device may evaluate whether a result intended by the user is obtainable from a response of the AI model when the user input is input to the AI model. For example, the electronic device may compare the number of parameters (or a score) included in the user input with a reference number (or a reference score).

According to an embodiment, the electronic device may determine parameters required for evaluation, based on content of the query of the user input. For example, the electronic device may identify whether input data includes assignment of a role, a sentence length, a location, a date, a duration, participants, and an emphasis, as parameters for the travel category, and may identify whether the input data includes an output language, an output format, and an output style, as request items for the response of the AI model.

According to an embodiment, in operation 1640, the electronic device may identify that a result of evaluation of the user input indicates that all the parameters are included, and determine a level of the information included in the user input as high. When a user configures a prompt level as middle, since a level of the current user input is high, the electronic device may determine that prompt reinforcement based on a prompt template is not required.

According to an embodiment, the electronic device may determine that the number of parameters included in the user input is equal to or greater than the reference number, and may not perform a prompt generation process using a prompt template. The electronic device may input the user input to the AI model by using the user input as an input prompt of the AI model.

An electronic device according to various embodiments of the disclosure may include a memory, and a processor operatively connected to the memory.

According to an embodiment, the memory may store user data related to a user of the electronic device, and multiple prompt templates.

According to an embodiment, the memory may store instructions that are executable by the at least one processor and, when executed, cause the electronic device to receive a user input including a query to an artificial intelligence (AI) model, and select at least one of the multiple prompt templates stored in the memory, based on the user input.

According to an embodiment, the memory may store instructions causing the electronic device to identify, among input fields included in the selected prompt template, at least one input field that is fillable using information included in the received user input and at least one input field that is not fillable using the information included in the user input, generate a prompt corresponding to the user input by filling, for the selected prompt template, the at least one input field that is fillable using the information included in the user input, based on content of the user input, and filling the at least one input field that is not fillable using the information included in the user input, based on the user data stored in the memory, and input the generated prompt to the AI model.

According to an embodiment, the memory may store instructions causing the electronic device to, in case that there is an input field, among the input fields of the selected prompt template, which is not fillable using the user input and the user data stored in the memory, provide a guide UI to indicate a user to provide an additional user input.

According to an embodiment, the memory may store instructions causing the electronic device to fill at least one of the input fields included in the selected prompt template by using words included in the received user input.

According to an embodiment, the memory may store instructions causing the electronic device to determine a topic of the query from the user input, and select at least one prompt template corresponding to the determined topic among the multiple templates stored in the memory.

According to an embodiment, the memory may store instructions causing the electronic device to identify the number of parameters included in the user input among multiple pre-determined parameters, and in case that the identified number of parameters is less than a reference number, generate the prompt by using the prompt template and the user data.

According to an embodiment, the memory may store instructions causing the electronic device to, in case that the identified number of parameters is equal to or greater than the reference number, input the user input to the AI model.

According to an embodiment, the reference number may be configured by a user through a user interface.

According to an embodiment, the electronic device may further include a display, wherein the memory stores instructions causing the electronic device to display, through the display, at least one of the selected at least one template or the generated prompt.

According to an embodiment, the memory may store instructions causing the electronic device to fill the at least one input field by using information configured by a user through a user interface.

A method performed by an electronic device according to various embodiments of the disclosure may include receiving a user input including a query to an artificial intelligence (AI) model, selecting at least one of multiple prompt templates, based on the user input, identifying, among input fields included in the selected prompt template, at least one input field that is fillable using information included in the received user input and at least one input field that is not fillable using the information included in the user input, generating a prompt corresponding to the user input by filling, for the selected prompt template, the at least one input field that is fillable using the information included in the user input, based on content of the user input, and filling the at least one input field that is not fillable using the information included in the user input, based on user data stored in a memory, and inputting the generated prompt to the AI model.

According to an embodiment, the method may further include, in case that there is an input field, among the input fields of the selected prompt template, which is not fillable using the user input and the user data stored in the memory, providing a guide UI to indicate a user to provide an additional user input.

According to an embodiment, the generating of the prompt may include filling at least one of the input fields included in the selected prompt template by using words included in the received user input.

According to an embodiment, the selecting of the at least one prompt template may include determining a topic of the query from the user input, and selecting at least one prompt template corresponding to the determined topic among the multiple templates stored in the memory.

According to an embodiment, the method may include identifying the number of parameters included in the user input among multiple pre-determined parameters, and in case that the identified number of parameters is less than a reference number, generating the prompt by using the prompt template and the user data.

According to an embodiment, the method may include, in case that the identified number of parameters is equal to or greater than the reference number, inputting the user input to the AI model.

According to an embodiment, the reference number may be configured by a user through a user interface.

According to an embodiment, the method may include displaying, through the display, at least one of the selected at least one template or the generated prompt.

According to an embodiment, the method may include filling the at least one input field by using information configured by a user through a user interface.

A non-transitory computer-readable recording medium according to various embodiments of the disclosure may store instructions that, when executed by an electronic device, cause the electronic device to perform operations of receiving a user input including a query to an artificial intelligence (AI) model, selecting at least one of multiple prompt templates, based on the user input, identifying, among input fields included in the selected prompt template, at least one input field that is fillable using information included in the received user input and at least one input field that is not fillable using the information included in the user input, generating a prompt corresponding to the user input by filling, for the selected prompt template, the at least one input field that is fillable using the information included in the user input, based on content of the user input, and filling the at least one input field that is not fillable using the information included in the user input, based on user data stored in a memory, and inputting the generated prompt to the AI model.

An electronic device according to various embodiments disclosed herein may be one of various types of devices. The electronic devices may include, for example, a portable communication device (e.g., a smartphone), a computer device, a portable multimedia device, a portable medical device, a camera, a wearable device, or a home appliance. The electronic device according to the embodiments set forth herein is not limited to the above-described devices.

It is to be understood that various embodiments of the disclosure and terms for describing the embodiments are not intended to limit the technical features disclosed herein to specific embodiments, and that the embodiments include various modifications, equivalents, or alternatives of the corresponding embodiments. In relation to the description of the drawings, similar reference numerals may be used for similar or relevant components. The singular form of a noun corresponding to an item may include one item or a plurality of items unless the context clearly indicates otherwise. As used herein, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

The term "module" used in various embodiments of the disclosure may include a unit implemented in hardware, software, or firmware, and may be used interchangeably with terms such as "logic," "logic block," "component," "circuit," or the like. The module may be an integrally configured component or a minimum unit or a portion of the component, which performs one or more functions. For example, according to an embodiment, the module may be implemented in the form of an application-specific integrated circuit (ASIC).

Various embodiments disclosed herein may be implemented by software (e.g., the program 140) including one or more instructions stored in a storage medium (e.g., internal memory 136 or external memory 138) readable by a machine (e.g., an electronic device 101). For example, a processor (e.g., the processor 120) of a device (e.g., the electronic device 101) may invoke and execute at least one of the stored one or more instructions from the storage medium. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments set forth herein may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play Store^{™}) or directly between two user devices (e.g., smartphones), or may be distributed online (e.g., downloaded or uploaded). If distributed online, at least part of the computer program product may be temporarily stored or produced in a machine-readable storage medium such as a manufacturer's server, a server of an application store, or the memory of a relay server.

According to various embodiments, each component (e.g., a module or a program) of the above-described components may include a single entity or multiple entities, and some of the multiple entities may be separately disposed in different components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by a module, a program, or other components may be executed sequentially, in parallel, repetitively, or heuristically, one or more of the operations may be executed in a different order or omitted, or one or more other operations may be added.

## Claims

1. An electronic device comprising:
a memory; and
a processor operatively connected to the memory,
wherein the memory is configured to store user data related to a user of the electronic device, and multiple prompt templates, and
wherein the memory is configured to store instructions that are executable by the at least one processor and, when executed, cause the electronic device to:
receive a user input including a query to an artificial intelligence (AI) model;
select at least one of the multiple prompt templates stored in the memory, based on the user input;
identify, among input fields included in the selected prompt template, at least one input field that is fillable using information included in the received user input and at least one input field that is not fillable using the information included in the user input;
generate a prompt corresponding to the user input by filling, for the selected prompt template, the at least one input field that is fillable using the information included in the user input, based on content of the user input, and filling the at least one input field that is not fillable using the information included in the user input, based on the user data stored in the memory; and
input the generated prompt to the AI model.

2. The electronic device of claim 1, wherein the memory is configured to store instructions that cause the electronic device to, in case that, among the input fields of the selected prompt template, there is an input field which is not fillable using the user input and the user data stored in the memory, provide a guide UI to indicate the user to provide an additional user input.

3. The electronic device of claim 1 or 2, wherein the memory is configured to store instructions that cause the electronic device to fill at least one of the input fields included in the selected prompt template by using words included in the received user input.

4. The electronic device of one of claims 1 to 3, wherein the memory is configured to store instructions that cause the electronic device to determine a topic of the query from the user input, and select at least one prompt template corresponding to the determined topic among the multiple templates stored in the memory.

5. The electronic device of one of claims 1 to 4, wherein the memory is configured to store instructions that cause the electronic device to:
identify the number of parameters included in the user input among multiple pre-determined parameters; and
in case that the identified number of parameters is less than a reference number, generate the prompt by using the prompt template and the user data.

6. The electronic device of claim 5, wherein the memory is configured to store instructions that cause the electronic device to, in case that the identified number of parameters is equal to or greater than the reference number, input the user input to the AI model.

7. The electronic device of claim 5, wherein the reference number is configurable by the user through a user interface.

8. The electronic device of one of claims 1 to 7, further comprising a display,
wherein the memory is configured to store instructions that cause the electronic device to display, through the display, at least one of the selected at least one template or the generated prompt.

9. The electronic device of one of claims 1 to 8, wherein the memory is configured to store instructions that cause the electronic device to fill the at least one input field by using information configured by the user through a user interface.

10. A method performed by an electronic device, the method comprising:
receiving a user input including a query to an artificial intelligence (AI) model;
selecting at least one of multiple prompt templates, based on the user input;
identifying, among input fields included in the selected prompt template, at least one input field that is fillable using information included in the received user input and at least one input field that is not fillable using the information included in the user input;
generating a prompt corresponding to the user input by filling, for the selected prompt template, the at least one input field that is fillable using the information included in the user input, based on content of the user input, and filling the at least one input field that is not fillable using the information included in the user input, based on user data stored in a memory; and
inputting the generated prompt to the AI model.

11. The method of claim 10, further comprising, in case that, among the input fields of the selected prompt template, there is an input field which is not fillable using the user input and the user data stored in the memory, providing a guide UI to indicate the user to provide an additional user input.

12. The method of claim 10 or 11, wherein the generating of the prompt comprises filling at least one of the input fields included in the selected prompt template by using words included in the received user input.

13. The method of one of claims 10 to 12, wherein the selecting of the at least one prompt template comprises determining a topic of the query from the user input, and selecting at least one prompt template corresponding to the determined topic among the multiple templates stored in the memory.

14. The method of one of claims 10 to 13, comprising:
identifying the number of parameters included in the user input among multiple pre-determined parameters;
in case that the identified number of parameters is less than a reference number, generating the prompt by using the prompt template and the user data; and
in case that the identified number of parameters is equal to or greater than the reference number, inputting the user input to the AI model.

15. A non-transitory computer-readable recording medium storing instructions that, when executed by an electronic device, cause the electronic device to perform:
an operation of receiving a user input including a query to an artificial intelligence (AI) model;
an operation of selecting at least one of multiple prompt templates, based on the user input;
an operation of identifying, among input fields included in the selected prompt template, at least one input field that is fillable using information included in the received user input and at least one input field that is not fillable using the information included in the user input;
an operation of generating a prompt corresponding to the user input by filling, for the selected prompt template, the at least one input field that is fillable using the information included in the user input, based on content of the user input, and filling the at least one input field that is not fillable using the information included in the user input, based on user data stored in a memory; and
an operation of inputting the generated prompt to the AI model.
